# EUROPEAN PATENT APPLICATION

(11) **EP 4 848 625 A1**
(43) Date of publication of application: **02.12.2026**
(21) Application number: 24921456.0
(22) Date of filing: 23.09.2024
(51) Int. Cl.: H04L 1/00

(54) **METHOD FOR SENDING CHANNEL STATE INFORMATION, METHOD FOR RECEIVING CHANNEL STATE INFORMATION, AND APPARATUS AND STORAGE MEDIUM**

(30) Priority: 01.02.2024 CN 202410154237
(71) Applicant: ZTE Corporation, Shenzhen, Guangdong 518057 (CN)
(72) Inventor: XIAO, Huahua, Shenzhen, Guangdong 518057 (CN); LU, Zhaohua, Shenzhen, Guangdong 518057 (CN); LIU, Wenfeng, Shenzhen, Guangdong 518057 (CN); LI, Lun, Shenzhen, Guangdong 518057 (CN); LI, Yong, Shenzhen, Guangdong 518057 (CN); LIU, Kun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/120478
(87) International publication number: WO 2025/161432

(57) **Abstract**

Provided in the embodiments of the present disclosure are a method for sending channel state information, a method for receiving channel state information, and an apparatus and a storage medium. The method for sending channel state information comprises: acquiring N port sets, wherein each of the N port sets comprises at least one port, and N is an integer greater than 1; determining K1 pieces of intra-set channel state information of the N port sets and K2 pieces of inter-set channel state information of the N port sets; and generating a channel state information report on the basis of the K1 pieces of intra-set channel state information and the K2 pieces of inter-set channel state information, and sending the channel state information report, wherein K1 and K2 are both positive integers, and K1 is less than or equal to N.

## Description

The present disclosure claims a priority to Chinese Patent Application No. 202410154237.9, and filed on February 01, 2024, the entire content of which is incorporated into herein by reference.

### TECHNICAL FIELD

The present disclosure relates to the field of communication technologies, and in particular, to methods for sending and receiving channel state information, an apparatus, and a storage medium.

### BACKGROUND

Multi-antenna technology may improve performance of a wireless communication system and has been widely used in various wireless communication systems. In order to achieve the performance of multi-antennas, a communication node needs to obtain more accurate channel information. With the development of wireless communication technology, for example, the 5th generation mobile communication technology (5G) or future mobile communication technologies (including but not limited to the 6th generation mobile communication technology (6G), etc.) have increasingly higher requirements for higher transmission rates, and arrays with a larger number of antennas may emerge, such as 64 antennas, 128 antennas, or even 256 antennas. Furthermore, various forms of antennas may emerge, such as an ultra-large area planar array, a 3-dimensional antenna array, a circular antenna array, a loop antenna array, various irregular antenna arrays, and other forms of antenna arrays.

### SUMMARY

The present disclosure provides methods for sending and receiving channel state information, an apparatus, and a storage medium, which are used to improve the flexibility of generating channel state information and the accuracy of acquiring channel state information.

In a first aspect, the present disclosure provides a method for sending channel state information, and the method for sending channel state information includes: acquiring N port sets, where each port set among the N port sets includes at least one port, N is an integer greater than 1; determining K1 pieces of intra-set channel state information of the N port sets and K2 pieces of inter-set channel state information of the N port sets; generating a channel state information report according to the K1 pieces of intra-set channel state information and the K2 pieces of inter-set channel state information, and sending the channel state information report; where K1 and K2 are both positive integers, and K1 is less than or equal to N.

In a second aspect, the present disclosure provides a method for receiving channel state information, and the method for receiving channel state information includes: receiving a channel state information report, where the channel state information report includes K1 pieces of intra-set channel state information of N port sets and K2 pieces of inter-set channel state information of the N port sets, where each port set among the N port sets includes at least one port, and N is an integer greater than 1; generating channel state information according to the K1 pieces of intra-set channel state information and the K2 pieces of inter-set channel state information, where K1 and K2 are both positive integers, and K1 is less than or equal to N.

In a third aspect, the present disclosure provides a communication apparatus, and the communication apparatus includes: an acquiring module, configured to acquire N port sets, where each port set among the N port sets includes at least one port, and N is an integer greater than 1; a determining module, configured to determine K1 pieces of intra-set channel state information of the N port sets and K2 pieces of inter-set channel state information of the N port sets; a sending module, configured to generate a channel state information report according to the K1 pieces of intra-set channel state information and the K2 pieces of inter-set channel state information, and send the channel state information report, where K1 and K2 are both positive integers, and K1 is less than or equal to N.

In a fourth aspect, the present disclosure provides another communication apparatus, and the communication apparatus includes: a receiving module, configured to receive a channel state information report, where the channel state information report includes K1 pieces of intra-set channel state information of N port sets and K2 pieces of inter-set channel state information of the N port sets, and each port set among the N port sets includes at least one port, and N is an integer greater than 1; a processing module, configured to generate channel state information according to the K1 pieces of intra-set channel state information and the K2 pieces of inter-set channel state information, where K1 and K2 are both positive integers, and K1 is less than or equal to N.

In a fifth aspect, the present disclosure provides a communication apparatus, and the communication apparatus includes: a processor and a memory, where the memory has stored instructions executable by the processor; and the processor is configured to, upon executing the instructions, enable the communication apparatus to perform the method provided in the first aspect or the second aspect.

In a sixth aspect, the present disclosure provides a computer readable storage medium, and the computer readable storage medium has stored computer instructions, and the computer instructions, upon being executed on a computer, enable the computer to perform the method provided in the first aspect or the second aspect.

In a seventh aspect, the present disclosure provides a computer program product containing computer instructions, and the computer instructions, upon being executed on a computer, enable the computer to perform the method provided in the first aspect or the second aspect.

### BRIEF DESCRIPTION OF THE DRAWINGS

The drawings are used to provide a further understanding of the technical solutions of the present disclosure, constitute a part of the specification, are used to explain the technical solutions of the present disclosure together with the embodiments of the present disclosure, and do not limit the technical solutions of the present disclosure.
FIG. 1 is a schematic diagram of an architecture of a communication system, according to the embodiments of the present disclosure.
FIG. 2 is a flow chart of a method for sending channel state information according to the embodiments of the present disclosure.
FIG. 3A is a schematic diagram of a port set according to the embodiments of the present disclosure.
FIG. 3B is a schematic diagram of another port set according to the embodiments of the present disclosure.
FIG. 4 is a schematic diagram of intra-set channel state information according to the embodiments of the present disclosure.
FIG. 5 is a schematic diagram of another intra-set channel state information according to the embodiments of the present disclosure.
FIG. 6A is a schematic diagram of an intra-set channel state information set according to the embodiments of the present disclosure.
FIG. 6B is a schematic diagram of another intra-set channel state information set according to the embodiments of the present disclosure.
FIG. 6C is a schematic diagram of yet another intra-set channel state information set according to the embodiments of the present disclosure.
FIG. 7 is a flowchart of a method for receiving channel state information according to the embodiments of the present disclosure.
FIG. 8 is a schematic diagram of components of a communication apparatus, according to the embodiments of the present disclosure.
FIG. 9 is a schematic diagram of components of another communication apparatus, according to the embodiments of the present disclosure.
FIG. 10 is a structural schematic diagram of a communication apparatus, according to the embodiments of the present disclosure.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. All other embodiments obtained based on the embodiments of the present disclosure by the ordinary skilled in the art without paying any creative effort, shall be included in the protection scope of the present disclosure.

In the description of the present disclosure, unless otherwise specified, the symbol "/" means "or", and for example, A/B may represent A or B. Herein, "and/or" is only used to describe an associated relationship between associated objects, representing that there may be three relationships. For example, A and/or B may represent three cases: only A, A and B, and only B. Additionally, "at least one" means one or more, and "multiple/plurality of" means two or more. Words, such as "first" and "second", do not limit the quantity and execution order, and the words, such as "first" and "second", also do not necessarily limit different items.

It should be noted that, in the present disclosure, the words such as "exemplary/exemplarily" or "for example (e.g.)", are used to describe an example, illustration, or explanation. Any embodiment or design scheme described with words, such as "exemplary/exemplarily" or "for example (e.g.)" in the present disclosure should not be construed as preferred or advantageous over other embodiments or design schemes. Specifically, the use of the terms such as "exemplary (exemplarily)" or "for example (e.g.)", etc., is intended to present related concepts in a specific manner.

Multi-antenna technologies have been widely used in various wireless communication technologies. Multi-antenna technologies include multiple-input-multiple-output (MIMO), multi-transmission-node joint transmission (JT), and high-frequency beamforming, etc. In a multi-antenna system, channel state information describes the characteristics of a radio channel, including information such as a direction, amplitude and phase of the channel, and is crucial for the transmission and reception of a signal. With the development and wide application of wireless communication technology, the requirement for transmission rate is getting higher and higher, the used frequency bands and a number of transmitting/receiving antennas increase accordingly, and a higher requirement for the accuracy of channel state information is put forward.

For example, the 5th generation mobile communication technology (5G) or future mobile communication technologies (including but not limited to the 6th generation mobile communication technology (6G), etc.) have increasingly higher requirements for higher transmission rates, and arrays with a larger number of antennas may emerge, such as 64 antennas, 128 antennas, or even 256 antennas. Furthermore, various forms of antennas may emerge, such as an ultra-large area planar array, a 3-dimensional antenna array, a circular antenna array, a loop antenna array, various irregular antenna arrays, and other forms of antenna arrays. In addition, due to reasons such as the increase in the number of antennas or the diversity of antenna array forms, the radio propagation no longer satisfies the plane wave assumption, the codebooks designed accordingly no longer satisfy the requirements. Therefore, how to improve the flexibility for generating channel state information and the accuracy for acquiring channel state information is a technical problem to be solved urgently in the related art.

In view of this, the present disclosure provides a method for sending channel state information, and the method for sending channel state information includes: acquiring N port sets, where each port set among the N port sets includes at least one port, N is an integer greater than 1; determining K1 pieces of intra-set channel state information of the N port sets and K2 pieces of inter-set channel state information between all or part of port sets among the N port sets; generating a channel state information report according to the K1 pieces of intra-set channel state information and the K2 pieces of inter-set channel state information, and sending the channel state information report; where K1 and K2 are both positive integers, and K1 is less than or equal to N. In some embodiments, K1 is greater than 1. In this way, in the case of a plurality of port sets, intra-set channel state information of the plurality of port sets and inter-set channel state information between all or part of the port sets of the plurality of port sets may be determined, and then a channel state information report is generated according to the intra-set channel state information and the inter-set channel state information. A second communication node obtains the channel state information report, and may generate channel state information according to the intra-set channel state information and the inter-set channel state information, and use the generated channel state information to send data or a signal. The final channel state information matches channel states under the plurality of port sets better, thereby improving the flexibility of generating channel state information and the accuracy of acquiring channel state information, and further improving the performance of the communication system.

Correspondingly, the present disclosure further provides a method for receiving channel state information, and the method for receiving channel state information includes: receiving a channel state information report; where the channel state information report includes K1 pieces of intra-set channel state information of N port sets and K2 pieces of inter-set channel state information of all or part of the port sets among the N port sets, where each port set among the N port sets includes at least one port, and N is an integer greater than 1; generating channel state information according to the K1 pieces of intra-set channel state information and the K2 pieces of inter-set channel state information. Thus, the received channel state information report is generated based on the intra-set channel state information and the inter-set channel state information, and the second communication node obtains the channel state information report, and may generate the channel state information according to the intra-set channel state information and the inter-set channel state information, and use the generated channel state information to send data or a signal. The final channel state information matches channel states under the plurality of port sets better, thereby improving the flexibility of generating channel state information and the accuracy of acquiring channel state information, and further improving the performance of the communication system.

The technical solutions provided in the embodiments of the present disclosure may be applied to various mobile communication networks, for example, new radio (New Radio, NR) mobile communication networks adopting the 5th generation mobile communication technology (5G), future mobile communication networks (including but not limited to various 6th generation mobile communication technologies (6G)), or multiple communication fusion systems, etc., which are not limited to the embodiments of the present disclosure.

A network architecture of a mobile communication network (including but not limited to 3G, 4G, 5G and future mobile communication networks) in the embodiments of the present disclosure may include network side devices (for example, including but not limited to a base station) and receiving side devices (for example, including but not limited to a terminal). Also, it should be understood that, in the example, in a downlink, a first communication node (also referred to as a first communication node device) may be a base station side device, and a second communication node (also referred to as a second communication node device) may be a terminal side device. Certainly, in an uplink, the first communication node may also be a terminal side device, and the second communication node may also be a base station side device. In a case where two communication nodes are in a device-to-device communication, both the first communication node and the second communication node may be base stations or terminals. The first communication node and the second communication node may be respectively referred to as a first node and a second node for short.

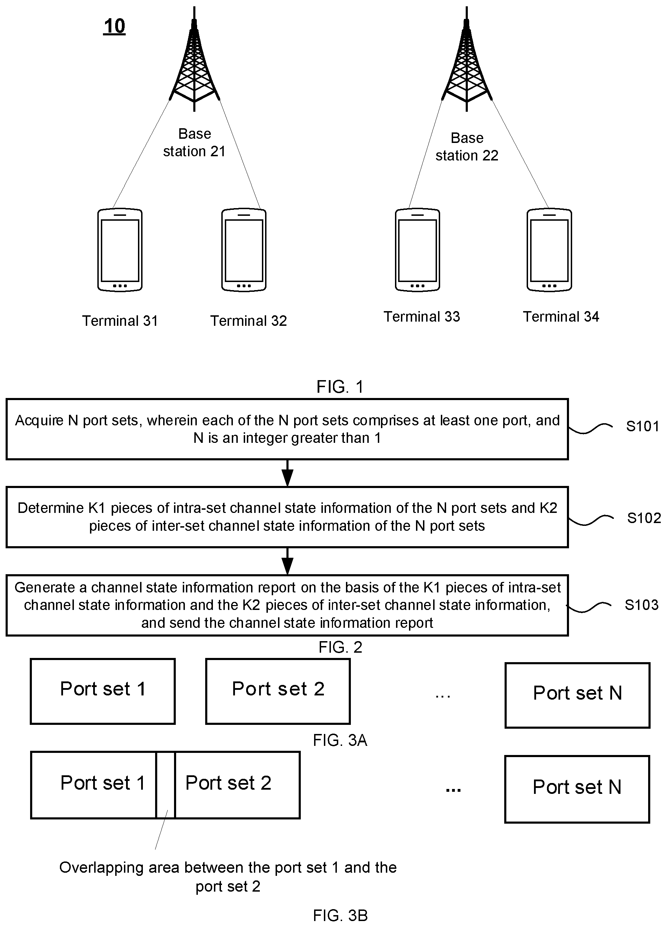

Exemplarily, taking an example in which the network-side device is a base station and the receiving-side device is a terminal, FIG. 1 shows a schematic diagram of an architecture of a communication system according to the embodiments of the present disclosure. As shown in FIG. 1, a communication system 10 includes a plurality of base stations (e.g., base station 21 and base station 22) and a plurality of terminals (e.g., terminal 31, terminal 32, terminal 33, and terminal 34). The plurality of base stations and the plurality of terminals may be communicatively connected. A base station may provide network services to terminals in a cell, and may also provide network services to terminals in a plurality of cells simultaneously.

In some embodiments, a base station may be a base station or an evolutional base station (evolutional node B, eNB or eNodeB) in long term evolution (LTE), long term evolution advanced (LTEA), a base station device in a 5G network, or a base station in a future communication system, etc. The base station may include various macro base stations, micro base stations, home base stations, wireless remote devices, reconfigurable intelligent surfaces (RISs), routers, wireless fidelity (WIFI) devices, or logical entities in a primary cell and a secondary cell, etc.

In some embodiments, the terminal may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a user equipment (User Equipment, UE), an access terminal, a UE unit, a mobile station, a mobile platform, a remote station, a remote terminal, a mobile device, a UE terminal, a wireless communication device, a UE agent, or a UE apparatus, etc., which is not limited to the embodiments of the present disclosure.

In some embodiments, the higher layer signaling includes but is not limited to radio resource control (RRC), media access control-control element (MAC CE), and other signalings other than the physical layer signaling, such as an LTE positioning protocol (LTE Positioning Protocol, LPP) higher layer signaling, an NR positioning protocol A (NR Positioning Protocol A, NRPPa) higher layer signaling, and LTE positioning protocol A (LTE Positioning Protocol A, LPPa) higher layer signaling. LPP is also applied to an NR positioning protocol. The physical layer signaling may also be transmitted between the base station and the terminal, for example, the base station and the terminal may transmit a downlink physical layer signaling on a physical downlink control channel (PDCCH), or transmit an uplink physical layer signaling on a physical uplink control channel (PUCCH).

In some embodiments, indicators/indications of various parameters may also be referred to as indices or identifiers (IDs), and concepts of indicator/indication, identifier and index are equivalent. For example, a resource identifier of a wireless system may also be referred to as a resource indication or a resource index. The resource of the wireless system includes, but is not limited to one of: an index corresponding to a reference signal resource, a reference signal resource group, a reference signal resource configuration, a channel state information (Channel State Information, CSI) report, a CSI report set, a terminal, a base station, a panel, a neural network, a sub-neural network, a neural network layer, a precoding matrix, a beam, a transmission mode, a sending mode, a receiving mode, a module, a model, a functional module, a function, etc. The base station may indicate an identifier of a resource or a group of resources to a terminal via a higher-layer signaling or physical layer signaling. The terminal may also send an identifier of a resource or a group of resources to the base station via the higher-layer signaling and/or physical layer signaling.

In some embodiments, transmission includes sending or receiving. For example, sending data or signals and receiving data or signals.

In some embodiments, in order to calculate channel state information or perform channel estimation, mobility management, positioning, etc., a base station or a terminal needs to send a reference signal (RS). The reference signal includes but is not limited to a channel state information-reference signal (channel-state information reference signal, CSI-RS). The channel state information-reference signal includes a zero power CSI-RS (ZP CSI-RS) and a non-zero power CSI-RS (NZP CSI-RS), channel state information-interference measurement (CSI-IM), a sounding reference signal (SRS), a synchronization signal block (SSB), a physical broadcast channel (PBCH), and a synchronization signal block/physical broadcast channel (SSB/PBCH). The NZP CSI-RS may be used to measure a channel or measure interference. The CSI-RS may be used for tracking, and may be referred to as a tracking reference signal (CSI-RS for Tracking, TRS), while the CSI-IM is generally used to measure interference. SRS is used to measure an uplink channel. In addition, a set of resource elements (REs) included in a time-frequency resource used for transmitting a reference signal is referred to as a reference signal resource, for example, CSI-RS resource, SRS resource, CSI-IM resource, and SSB resource. In the present disclosure, the SSB includes a synchronization signal block and/or a physical broadcast channel.

In some embodiments, in order to save signaling overhead, etc., a plurality of reference signal resources may be grouped into a plurality of sets (a reference signal resource set is sometimes also referred to as a reference signal resource group, for example, a CSI-RS resource set, a CSI-IM resource set, and an SRS resource set). The reference signal resource set includes at least one reference signal resource, and a plurality of reference signal resource sets may come from a same reference signal resource setting (for example, a CSI-RS resource setting and an SRS resource setting, where the CSI-RS resource setting may be merged with a CSI-IM resource setting, and both are referred to as a CSI-RS resource setting), to configure parameter information.

In some embodiments, a time instance represents a time period, for example, it may be a slot, such as a slot, a mini slot, or a symbol group. A slot or mini slot may include at least one symbol. Herein, the symbol refers to a time unit in a subframe or frame or slot, and the unit may be millisecond, microsecond, nanosecond, second, etc. The symbol may be an orthogonal frequency division multiplexing (OFDM) symbol, a single-carrier frequency division multiple access (SC-FDMA) symbol, an orthogonal frequency division multiple access (OFDMA) symbol, or symbols corresponding to various new waveforms in future communication systems, etc.

In some embodiments, a minimum transmission unit for carrying a modulation symbol is a resource element (RE), the RE is a minimum time-frequency resource for transmitting a modulation symbol, which includes a radio resource on a frequency-domain subcarrier and a symbol. A radio resource composed of a plurality of symbols and a plurality of subcarriers constitutes a physical resource block (PRB).

In some embodiments, a communication node may select an information processing mode to process the obtained information (e.g., channel information, channel matrix information, time-domain channel information, frequency-domain channel information, angle information, position information), to obtain an information processing result. The information processing result includes one or more pieces of the channel state information, or one or more pieces of the beam parameter information.

In some embodiments, the information processing method may be a traditional information processing method or various advanced information processing methods. The advanced information processing method includes but is not limited to an information processing method based on artificial intelligence (AI).

In some embodiments, artificial intelligence includes devices, components, software, modules, models, functional modules, functional functions, etc., with self-learning capabilities, such as machine learning (ML), deep learning, reinforcement learning, transfer learning, deep reinforcement learning, meta learning, etc. In some embodiments, an artificial intelligence network may be implemented through a model, and the model may include a neural network model. The neural network model includes a neural network model structure and/or a neural network model parameter. The neural network model structure may be referred to as a model structure for short, and the neural network model parameter may be referred to as a network parameter or a model parameter for short. A model structure may correspond to a plurality of sets of different neural network model parameter values, to adapt to different scenarios. The neural network model parameters are obtained by online training or offline training. For example, the neural network model is trained to obtain the neural network model parameters, by inputting at least one sample and label. Exemplarily, a sample includes N features (Features) and M labels (Labels), N is a positive integer, and M is an integer greater than or equal to 0. In addition, a plurality of samples may constitute a data set.

In some examples, in order to better transmit data or signals, the base station or terminal needs to acquire a measurement parameter. The measurement parameter may include channel state information or other parameters used to characterize a channel. The channel state information may include at least one of: a channel state information-reference signal resource indicator (CSI-RS resource indicator, CRI), a synchronization signal block resource indicator (SSBRI), layer 1 reference signal received power (L1 reference signal received power, L1-RSRP or RSRP), differential RSRP, layer 1 signal-to-interference-plus-noise ratio (L1 signal-to-interference noise ratio, L1-SINR or SINR), differential L1-SINR, reference signal received quality (RSRQ), L1-RSRQ, differential RSRQ, a channel quality indicator (CQI), a precoding matrix indicator (PMI), a layer indicator (LI), a rank indicator (RI), or precoding information. The precoding information includes first-type precoding information, for example, codebook-based precoding information (for example, an N-antenna codebook in LTE, where N=2, 4, 8, 12, 16, 24, 32, etc., a type I codebook, a type II codebook, a type II port selection codebook, an enhanced type II codebook, an enhanced type II selection codebook, and a Further enhanced type II selection codebook in NR). Herein, the precoding matrix indicator is a type of codebook-based precoding information. The precoding information further includes a non-codebook-based implementation, for example, second-type precoding information (for example, channel state information obtained based on advanced information processing technologies such as AI).

In some examples, channel information is information that is obtained according to a reference signal (e.g., CSI-RS) and used for describing channel environment between communication nodes, such as a time-domain channel matrix, a frequency-domain channel matrix, an eigenvector or eigenvector group corresponding to the channel matrix, and a singular vector or singular vector group. In some examples, the channel information is a complex matrix, and a size of the channel matrix is related to a number Nt of transmitting antennas, a number Nr of receiving antennas, and a resource element (Resource Element, RE), and Nt and Nr are positive integers. For example, there is at least one Nr*Nt channel matrix on a physical resource block (Physical Resource Block).

In the embodiments of the present disclosure, feedback CSI may also be referred to as transmitting CSI or sending CSI, for example, carrying the channel state information on an uplink transmission resource for feedback or transmission. The uplink transmission resource and the corresponding CSI are both indicated by a channel state information report. In an example, transmitting a CSI report refers to transmitting a content that needs to be transmitted as indicated in the CSI report, including but not limited to channel state information. Transmitting here includes sending or receiving, and may also be replaced by feeding back or receiving.

In some embodiments, the antenna is a physical antenna. In some examples, the antenna is a logical antenna. In some examples, concepts of a port, an antenna, an antenna port, a reference signal port, and a pilot port are interchangeable. In some examples, the antenna is a sending antenna. In some examples, the antenna is a receiving antenna. In some examples, the antenna is an antenna pair including a sending antenna and a receiving antenna.

In some examples, the antenna is a uniform circular array. In some examples, the antenna may be a non-uniform linear array. In some examples, the antenna is a non-uniform planar array. In some examples, the antenna is a non-uniform circular array. In some examples, the antenna may be a special-shaped antenna. In some examples, the antenna array may be a spatial array, such as a cuboid array, a cube array, a spherical array, a sphere array, or a parabolic array.

In some examples, the antenna is a directional antenna. In some examples, the antenna is an omnidirectional antenna. In some examples, the antenna is a dual-polarized antenna. In some examples, the antenna is a single-polarized antenna. In some examples, the antenna is a triple-polarized antenna or a multi-polarized antenna. In some examples, an antenna may be a polarized antenna of at least one of: a horizontally polarized antenna, a vertically polarized antenna, a slant-polarized antenna (for example, a +45-degree polarized antenna, a -45-degree polarized antenna), a circularly polarized antenna (a left-hand circularly polarized antenna, a right-hand circularly polarized antenna), and an elliptically polarized antenna (a left-hand elliptically polarized antenna, a right-hand elliptically polarized antenna).

As shown in FIG. 2, the present disclosure provides a method for sending channel state information, which is applied to a first communication node, for example, various types of terminals. The method for sending channel state information includes S101 to S103 as follows.

In S101, N port sets are acquired, each port set among the N port sets includes at least one port, and N is an integer greater than 1.

Exemplarily, a communication system may include one or more base stations and one or more terminals. There are A1 sending ports and B1 receiving ports in total in the communication system, and A1 and B1 are both positive integers. In some embodiments, the A1 ports and the B1 ports in the communication system may be referred to as antennas, antenna ports, reference signal ports, pilot ports, etc. In some embodiments, the A1 sending ports may be ports on a panel of a same base station; alternatively, the A1 sending ports may be ports on a plurality of panels of a plurality of base stations. In some embodiments, the B1 receiving ports may be ports on a panel of a same terminal; alternatively, the B1 receiving ports may be ports on a plurality of panels of a plurality of terminals.

In an example, the base station may select A2 sending ports from the A1 sending ports, and group the A2 sending ports into N port sets. Furthermore, the base station may send description information of the N port sets to the terminal, and the terminal (that is, the first communication node) may acquire the N port sets by receiving the description information of the N port sets sent from the base station. A2 is a positive integer less than or equal to A1. Exemplarily, respective port sets among the above N port sets may respectively include P₁ ports, P₂ ports, ..., P_{N} ports, and P₁, P₂, ..., P_{N} are all positive integers greater than 1.

In some embodiments, the N port sets may be acquired according to a higher layer signaling and/or a physical layer signaling that is received. Exemplarily, the base station may send the description information of the N port sets via the first higher layer signaling and/or physical layer signaling, so that the terminal may acquire the N port sets according to the first higher layer signaling and/or physical layer signaling that is received.

In another example, the terminal may select A2 sending ports from the A1 sending ports, and group the A2 sending ports into N port sets. Furthermore, the terminal may send the description information of the N port sets to the base station, and the base station may acquire the N port sets by receiving the description information of the N port sets sent from the terminal. A2 is a positive integer less than or equal to A1. Exemplarily, respective port sets among the above N port sets may respectively include P₁ ports, P₂ ports, ..., P_{N} ports, and P₁, P₂, ..., P_{N} are all positive integers greater than 1.

In some embodiments, the N port sets may be acquired according to the higher layer signaling and/or physical layer signaling that is received. Exemplarily, the terminal may send the description information of the N port sets via second higher layer signaling and/or physical layer signaling, so that the base station may acquire the N port sets according to the second higher layer signaling and/or physical layer signaling that is received. Alternatively, the description information may also be channel state information in a channel state information report, that is, the channel state information fed back from the terminal to the base station may include the description information of the N port sets.

In some embodiments, the description information of the above N sets includes but is not limited to the following implementations: for example, a port index used to describe each port set among the N port sets, or a port index used to describe the A2 ports. In an example, the A2 ports that the terminal needs to measure here may be a subset of all A1 ports of the base station.

In some embodiments, the N port sets may also be acquired according to channel information and/or an antenna form of a communication node. That is, the base station or the terminal selects the above N port sets according to the antenna form and/or the channel information.

In some embodiments, the N port sets include at least a first port set and a second port set. A number of ports of the first port set is greater than or equal to a number of ports of the second port set.

In an example, a number of ports in respective port sets among the N port sets are all the same, that is, the numbers of ports P₁, P₂, ..., P_{N} corresponding to the N port sets may take the same value.

In another example, a number of ports of at least one port set among the N port sets is different from a number of ports of another port set among the N port sets. That is, at least one value of the numbers of ports P₁, P₂, ..., P_{N} corresponding to respective port sets among the N port sets is different from the other values. For example, a number of ports of the first port set is greater than a number of ports of the second port set; alternatively, values of P₁, P₂, ..., P_{N} are not completely the same.

In some embodiments, the N port sets include at least a first port set and a second port set, including one of: ports of the first port set being all different from ports of the second port set; ports of the first port set being partially the same as ports of the second port set; or the first port set being a subset of the second port set.

In an example, the ports in the N port sets are all different, that is, ports of each port set among the N port sets do not overlap with each other. The ports included in a port set are different from the ports included in any one of other port sets. As shown in FIG. 3A, there is no overlapping area in the images corresponding to port set 1, port set 2, ..., port set N, i.e., these N port sets.

In another example, the ports included in a port set among the N port sets overlap with the ports included in at least one other port set among the N port sets, that is, a part of the ports included in two port sets are the same. As shown in FIG. 3B, there is an overlapping area between the image corresponding to port set 1 and the image corresponding to port set 2, and the ports corresponding to the overlapping area are the same ports in the port set 1 and the port set 2.

In yet another example, a port set among the N port sets is a subset of at least one other port set.

In some embodiments, an antenna type corresponding to the N port sets includes at least one of: a single-polarized antenna, a dual-polarized antenna, a multi-polarized antenna, an omnidirectional antenna, a vertically polarized antenna, a horizontally polarized antenna, a circularly polarized antenna, an elliptically polarized antenna, or a slant-polarized antenna.

In some embodiments, an antenna array corresponding to the N port sets includes at least one of: a linear antenna array, a planar antenna array, a circular antenna array, a loop antenna array, a spatial antenna array, or various irregular antenna arrays.

In S102, K1 pieces of intra-set channel state information of the N port sets and K2 pieces of inter-set channel state information of the N port sets are determined.

In some embodiments, the K2 pieces of inter-set channel state information of the N port sets may also be K2 pieces of inter-set channel state information between all or part of the port sets among the N port sets.

Exemplarily, the first communication node may determine N port sets, and respective port sets may include P₁ ports, P₂ ports, ..., P_{N} ports. Furthermore, the first communication node determines intra-set channel state information of the N port sets and inter-set channel state information between all or part of the port sets among the N port sets. Further, the first communication node may also generate a channel state information report based on the intra-set channel state information and inter-set channel state information that are determined, and send the channel state information report.

In some embodiments, the above intra-set channel state information may include intra-set channel state information of each port set among the N port sets, or intra-set channel state information of part of the port sets among the N port sets.

In some embodiments, the above intra-set channel state information includes K1 pieces of intra-set channel state information, and the inter-set channel state information includes at least K2 pieces of inter-set channel state information. K1 and K2 are both positive integers, and K1 is less than or equal to N.

Exemplarily, the first communication node determines intra-set channel state information of part of the port sets among the N port sets, for example, the first communication node determines 4 port sets (N=4), and measures 2 port sets among the 4 port sets, to obtain intra-set channel state information corresponding to the 2 port sets. Thus, a channel state information report subsequently sent from the first communication node also only includes intra-set channel state information of the 2 port sets among the 4 port sets. In some examples, only K1 pieces of intra-set channel state information corresponding to the N port sets are different, and identical intra-set channel state information is merged into the same intra-set channel state information.

In some embodiments, the channel state information report further includes port index information of K1 port sets among the N port sets. Exemplarily, the port index information of the K1 port sets among the N port sets belongs to a part of the intra-set channel state information, that is, the intra-set channel state information in the channel state information report includes the port index information of the K1 port sets among the N port sets. Alternatively, the port index information of the K1 port sets among the N port sets belongs to a part of the CSI report other than the intra-set channel state information.

In some embodiments, the port index information includes one of: absolute index information of ports included in the K1 port sets; or relative index information of ports included in the K1 port sets.

In an example, the absolute index information is that the ports of the N port sets are sorted as a whole, and each port corresponds to a port index.

In another example, the N port sets are first sorted by port set, and each port set is internally sorted, where the relative index is a port set index and a port index within the set. For example, the relative index includes a port start index and a port index within the port set, or includes a port set index and a port index within the port set.

Exemplarily, a value of an element included in the intra-set channel state information may be used as the port index information. The channel state information report includes K1 pieces of intra-set channel state information, and at least one piece of intra-set channel state information among the K1 pieces of intra-set channel state information has a part of elements equal to zero. It should be noted that, the port index information may be indicated by the value of the element. The intra-set channel state information includes one or more zero elements. Moreover, the port corresponding to the zero element is a port that does not need to be measured, or may not be used to transmit data or a reference signal. Correspondingly, the intra-set channel state information also includes one or more non-zero elements, and the port corresponding to the non-zero element is a port that needs to be measured, or may be used to transmit data or the reference signal, so that the index of the port may be determined according to the position of the non-zero element, or the index of the port may be indirectly derived according to the position of the zero element.

Alternatively, the value of a codeword element corresponding to the intra-set channel state information may be used as the port index information. The channel state information report includes K1 pieces of intra-set channel state information, and at least one piece of intra-set channel state information among the K1 pieces of intra-set channel state information has a corresponding codeword element that is zero.

In some embodiments, the index information may be fed back based on the channel state information, for example, the channel state information is selected from the kth CSI set, so that an identifier of the channel state information set may be k, and the channel state information is the n-th channel state information in the k-th channel state information set. For the n-th channel state information, in a one-dimensional array, the n-th channel state information may be identified by "i1", in a two-dimensional array, the n-th channel state information may be identified by "i11, i12", and in a three-dimensional array, the n-th channel state information may be identified by "i11, i12, i13", where the indices such as k, n, i1, i11, i12, i11, i12, i13 are non-negative integers.

In another example, for a method for generating the channel state information based on AI, the amplitude or phase may be directly fed back, or indication information of the amplitude or indication information of the phase may be fed back.

In yet another example, in a case where the N pieces of channel state information are the same, only coefficients of elements in a piece of channel state information, or indications thereof, are required to be fed back for example, [c_{i,1}, c_{i,2}, ..., c_{i,Ni}]. Furthermore, a length of the intra-set channel state information is Ni or Ni-1. Alternatively, if N1 pieces of CSI among the N pieces of CSI are different from each other, coefficients of the N1 intra-set channel state information are required to be fed back. For example, the i-th intra-set channel state information is Ci=[c_{i,1}, c_{i,2}, ..., c_{i, Ni}], i=1, ..., N1, N1 is a positive integer.

In some embodiments, a length of at least one piece of intra-set channel state information among the K1 pieces of intra-set channel state information is greater than or equal to a length of at least one other piece of intra-set channel state information among the K1 pieces of intra-set channel state information. Alternatively, a type of channel state information of at least one piece of intra-set channel state information among the K1 pieces of intra-set channel state information is different from a type of channel state information of at least one other piece of intra-set channel state information among the K1 pieces of intra-set channel state information. For example, a method for generating channel state information corresponds to a type of the channel state information. The type of the channel state information includes but is not limited to types such as a codebook, an eigenvector, an eigenmatrix, a singular vector, a singular matrix, channel state information generated based on a non-linear method, a first-type codebook, a second-type codebook. For example, the type of the channel state information of at least one piece of intra-set channel state information is the first-type codebook, and the type of the channel state information of at least one other piece of intra-set channel state information includes the second-type codebook, etc. Yet alternatively, a generation method of at least one piece of intra-set channel state information among the K1 pieces of intra-set channel state information is different from a generation method of at least one other piece of intra-set channel state information among the K1 pieces of intra-set channel state information. In some examples, the generation methods of the K1 pieces of intra-set channel state information are all the same. In some examples, the types of pieces of the channel state information of the K1 pieces of intra-set channel state information are all the same.

In some embodiments, each port set among the determined N port sets corresponds to a piece of intra-set channel state information, and the intra-set channel state information may include intra-set channel state information description information. Moreover, each piece of intra-set channel state information among the K1 pieces of intra-set channel state information includes at least one of: one or more amplitude information, one or more phase information, indication information of one or more amplitudes, phase indication information of one or more coefficients, or an index of a channel state information set. A number of amplitudes and phases is less than or equal to a number of ports of the port set corresponding to the intra-set channel state information.

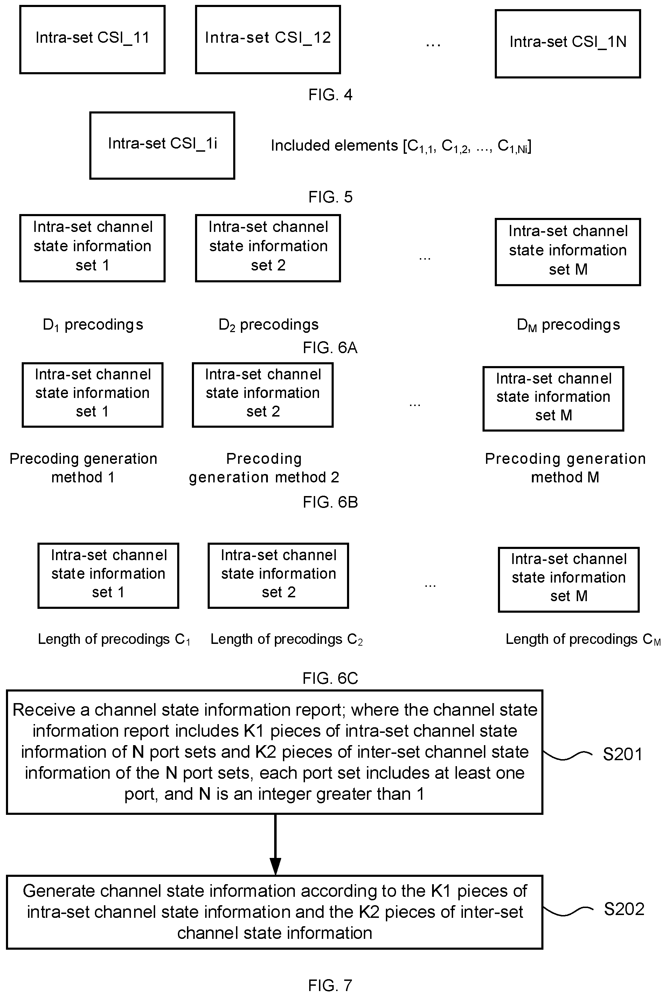

For example, as shown in FIG. 4, the intra-set channel state information description information, that is, the intra-set channel state information, includes intra-set CSI_11, intra-set CSI_12, ..., intra-set CSI_1N. In some embodiments, the intra-set channel state information description information is used to describe at least one of the following of the corresponding channel state information: one or more amplitudes, one or more phases, indication information of one or more amplitudes, or phase indication information of one or more coefficients.

Exemplarily, intra-set channel state information description information of the i-th port set among the N port sets may include Pᵢ coefficients or Pᵢ-1 coefficients, including Cᵢ,₁; Cᵢ,₂; ...; Cᵢ,_{Pi}; the coefficient may be represented as Cᵢ, ₖ. k=1, 2, ..., Pᵢ, and may be used to represent amplitude information and phase information, and i=1, 2, ..., N. As shown in FIG. 5, the intra-set CSI_1i may include [C_{1,1}, C_{1,2}, ..., C_{1, Ni}], where Pᵢ is equal to Ni.

In an example, a number of bits used for quantizing coefficients (such as the above coefficients representing amplitude information and phase information) in the intra-set channel state information description information of respective port sets among the N port sets are all the same, for example, K₁ bits may be adopted to quantize a parameter corresponding to the amplitude, and K₂ bits may be adopted to quantize a parameter corresponding to the phase.

In another example, a number of quantization bits of the intra-set channel state information of at least one port set among the N port sets is greater than or equal to a number of quantization bits of the intra-set channel state information of at least one other port set among the N port sets. For example, intra-set channel state information of a port set among the N port sets adopts K₁₁ bits to quantize a parameter corresponding to the amplitude and K₁₂ bits to quantize a parameter corresponding to the phase, and intra-set channel state information of another port set among the N port sets adopts K₂₁ bits to quantize a parameter corresponding to the amplitude and K₂₂ bits to quantize a parameter corresponding to the phase. K₁₁, K₁₂, K₂₁, and K₂₂ are all positive integers, and K₁₁+K₁₂ > K₂₁+K₂₂.

In an example, taking an example in which the intra-set channel state information description information of the i-th port set among the above N port sets may include Pᵢ coefficients or Pᵢ-1 coefficients (including Cᵢ,₁; Cᵢ,₂; ...; Cᵢ, _{Pi}), the coefficient may be represented as Cᵢ, ₖ. k=1, 2, ..., Pᵢ, and may be used to represent amplitude information and phase information, and i=1, 2, ..., N. The Pᵢ coefficients or Pᵢ-1 coefficients may be used to indicate one or more amplitude indication information and one or more phase indication information.

In another example, Pᵢ coefficients correspond to a codeword. Furthermore, in a one-dimensional antenna array, the codeword may be indicated by i1 in the coefficients; in a two-dimensional antenna array, the codeword may be indicated by "i11, i12" in the coefficients; in a three-dimensional antenna array, the codeword may be indicated by "i11, i12, i13" in the coefficients. The codeword may be a vector, for example, a vector determined based on a discrete Fourier transform (DFT).

In yet another example, Pᵢ coefficients correspond to a codeword constituted by a linear combination of a plurality of vectors. In a case where a number of vectors is L, a plurality of identifiers need to be adopted to respectively indicate the L vectors, and L is a positive integer. In addition, a plurality of identifiers are also needed to indicate the amplitude information and the phase information corresponding to respective vectors. Furthermore, in some embodiments, a number of bits used for indicating the phase information or the amplitude information in a port set among the N port sets may be greater than a number of bits used for indicating the phase information or the amplitude information of another port set among the N port sets.

In some embodiments, the intra-set channel state information description information in respective port sets among the N port sets is the same. It should be understood that, in this case, it is only necessary to feed back the intra-set channel state information description information of 1 port set. Alternatively, intra-set channel state information description information corresponding to N₁ port sets among the N port sets is different. It should be understood that, in this case, it is necessary to feed back the intra-set channel state information description information of the N₁ port sets. In addition, the description information here may include at least one of: one or more amplitudes, one or more phases, indication information of one or more amplitudes, or indication information of one or more coefficient phases.

In some embodiments, the intra-set channel state information is obtained according to M intra-set channel state information sets. In addition, the channel state information report further includes M intra-set channel state information set indices. The M intra-set channel state information set indices are used to indicate M intra-set channel state information sets. Moreover, a piece of intra-set channel state information includes at least one piece of intra-set channel state information. M is a positive integer.

Exemplarily, the M intra-set channel state information sets may include a set CSISet_11, a set CSISet_12, ..., a set CSISet_1M. Furthermore, the set CSISet_11 may include D₁ pieces of precoding information, the set CSISet_12 may include D₂ pieces of precoding information, ..., and CSISet_1M may include D_{M} pieces of precoding information. In some embodiments, the precoding information in the present disclosure may be a codeword, a precoding vector, or a precoding matrix. Furthermore, the precoding may be generated based on methods such as a DFT vector, and may also include a vector or a matrix generated based on other linear methods or non-linear methods. For example, the above non-linear method includes but is not limited to an AI-based manner, or may also directly include a channel matrix or a channel vector corresponding to a port set.

In some embodiments, the M intra-set channel state information sets satisfy at least one of: a number of channel state information of at least one intra-set channel state information set among the M intra-set channel state information sets is greater than or equal to a number of channel state information of at least one other intra-set channel state information set among the M intra-set channel state information sets; a channel state information generation method of at least one intra-set channel state information set among the M intra-set channel state information sets is different from a channel state information generation method of at least one other intra-set channel state information set among the M intra-set channel state information sets; the channel state information generation methods of the M intra-set channel state information sets are all the same; a length of channel state information of at least one intra-set channel state information set among the M intra-set channel state information sets is greater than or equal to a length of channel state information of at least one other intra-set channel state information set among the M intra-set channel state information sets; lengths of pieces of channel state information in a same intra-set channel state information set are the same, and lengths of pieces of channel state information in different intra-set channel state information sets are different; the types of pieces of the channel state information in a same intra-set channel state information set are the same, and types of pieces of channel state information in different intra-set channel state information sets are different.

In an example, the N pieces of intra-set channel state information include CSI_11, CSI_12, ..., CSI_1N, and CSI_11, CSI_12, ..., CSI_1N may be selected from the above M intra-set channel state information sets. For example, CSI_11 is selected from intra-set CSI set 1, CSI_12 is selected from intra-set CSI set 2, and CSI_1N is selected from intra-set CSI set M.

In some embodiments, a plurality of selection methods may be adopted to select N pieces of intra-set channel state information from the M intra-set channel state information sets. For example, part of the N pieces of intra-set channel state information may be selected from the same intra-set channel state information set, and the other part of the N pieces of intra-set channel state information may be selected from another intra-set channel state information set.

In some embodiments, the M intra-set channel state information sets are different in at least one of following aspects: a number of precodings being different, a generation method of the precoding being different, or a length of the precoding being different.

Exemplarily, lengths of the precodings in the same channel state information set in the M intra-set channel state information sets may be the same, and lengths of the precodings in different channel state information sets may be different. Alternatively, the lengths of the precodings in the same channel state information set may be the same, and the lengths of the precodings in different channel state information sets are also the same, but the generation methods of the precodings in different channel state information sets may be different. Yet alternatively, the generation methods of the precodings in the same channel state information set may be the same, and the generation methods of the precodings in different channel state information sets may be different. In addition, the intra-set channel state information set may also be represented as an intra-set CSISet, that is, the N pieces of intra-set channel state information may be determined from M CSISets.

In an example, the numbers of precodings included in different intra-set channel state information sets among the M intra-set channel state information sets are different. For example, as shown in FIG. 6A, the M intra-set channel state information sets respectively include D₁ precodings, D₂ precodings, ..., D_{M} precodings. D₁, D₂, ..., D_{M} are positive integers, and at least one value among D₁, D₂, ..., D_{M} is different from the other values. Alternatively, D₁, D₂, ..., D_{M} may also take a same value, but in this case, the generation methods of the precodings included in different intra-set channel state information sets are different.

In another example, the generation methods of the precodings included in different intra-set channel state information sets among the M intra-set channel state information sets are different.

Exemplarily, the generation methods of the precodings included in different intra-set channel state information sets in the M sets may be the same, but the lengths of the precodings included in different intra-set channel state information sets in the M sets are different. As shown in FIG. 6B, the generation methods of the precodings included in the M intra-set channel state information sets are, respectively, precoding generation method 1, precoding generation method 2, ..., precoding generation method M. In some embodiments, the above generation method includes at least one of: a generation method for generating channel state information based on at least one discrete Fourier transform (DFT) vector; a generation method for generating channel state information based on Householder transform; a generation method for generating channel state information based on channel information; a generation method for generating channel state information based on an eigenvector of channel information; or a generation method for generating channel state information based on a non-linear method.

The generation method for generating channel state information based on the non-linear method may include: for example, AI, dirty paper coding, etc. The generation method for generating channel state information based on the channel information includes directly quantizing the channel, quantizing a correlation matrix of the channel, etc.

In yet another example, the lengths of the precodings included in different intra-set channel state information sets among the M intra-set channel state information sets are different. In some embodiments, the lengths of the precodings included in the same intra-set channel state information set may be the same. As shown in FIG. 6C, the lengths of the precodings included in the M intra-set channel state information sets respectively are length of precodings C₁, length of precodings C₂, ..., length of precodings C_{M}. C₁, C₂, ..., C_{M} are all positive integers, and at least one value of C₁, C₂, ..., C_{M} is different from the other values. Alternatively, C₁, C₂, ..., C_{M} may also take the same value, but in this case, the generation methods of the precodings included in different intra-set channel state information sets are different. In some embodiments, an intra-set channel state information set for a port set including P ports may be included. Thus, the length of the corresponding intra-set channel state information may be selected from the intra-set channel state information set with a length of P, that is, the length of precodings of the channel state information in the intra-set channel state information set of the port set with P ports is P, and P is a positive integer.

Exemplarily, the base station may include M0 intra-set channel state information sets, and the base station selects M intra-set channel state information sets among the M0 intra-set channel state information sets according to at least one piece of information such as an antenna form, a scheduling algorithm, an antenna form of the terminal, or channel information from a user to the terminal, and sends description information of the M intra-set channel state information sets to the terminal via a higher layer signaling and/or physical layer signaling. Correspondingly, the terminal may acquire the description information of the M intra-set channel state information sets via the higher layer signaling and/or physical layer signaling. In some embodiments, the description information of the M intra-set channel state information sets includes but is not limited to one of: an identifier of each intra-set channel state information set among the M intra-set channel state information sets, and precoding description information in each intra-set channel state information set among the M intra-set channel state information sets. Precoding description information in an intra-set channel state information set includes but is not limited to one of the following included in the precoding: one or more amplitudes, one or more phases, indication information of one or more amplitudes, or phase indication information of one or more coefficients. A precoding corresponds to a piece of intra-set channel state information.

In some embodiments, the M intra-set channel state information set indices are determined from P intra-set channel state information sets according to an antenna form and/or channel information. P ≥ M, and P is a positive integer.

In some embodiments, the channel state information report further includes sorting information of intra-set channel state information of the N port sets. The sorting information between the intra-set channel state information is used to determine an order between different pieces of intra-set channel information. For example, there are K1 pieces of intra-set channel state information, and assume that a piece of sorting information is [I₁, I₂, ..., I_{K2}], where Iᵢ is used to indicate the Iᵢ-th piece of intra-set channel state information. Then, it means that a vector or a matrix corresponding to the Iᵢ-th piece of intra-set channel state information is placed before a vector or a matrix corresponding to the Iⱼ-th piece of intra-set channel state information. Herein, Iᵢ<Iⱼ, i and j = 1, ..., K1. Exemplarily, the sorting information between the intra-set channel state information of the N port sets belongs to a part of the intra-set channel state information, that is, the intra-set channel state information in the channel state information report includes the sorting information between the intra-set channel state information of the N port sets. Alternatively, the sorting information between the intra-set channel state information of the N port sets is indicated via a signaling other than the CSI report.

Exemplarily, the channel state information report sent from the first communication node may also include sorting information of the N port sets. Assume that a piece of sorting information is [I₁, I₂, ..., I_{K2}], where Iᵢ is used to indicate an index of the Iᵢ-th set. Then, it means that a vector or a matrix corresponding to the Iᵢ-th intra-set channel state information is placed before a vector or a matrix corresponding to the Iⱼ-th intra-set channel state information. Herein, Iᵢ<Iⱼ , i, j = 1, ..., K1. In some examples, the sorting information of the N port sets may be included in the description of the intra-set channel state information, or may be in the description of the inter-set channel state information, or may be included in other signaling or fields of the CSI report.

For example, the sorting information of the N port sets is to sort from large to small according to a specified port set identifier agreed by the base station and the terminal, and also includes sorting from small to large according to the specified identifier. The specified identifier is identifiers of the N port set, alternatively, the specified identifier is a smallest port identifier of each port set among the N port sets, yet alternatively, the specified identifier is a largest port identifier of each port set among the N port sets. For another example, the sorting information of the N port sets is an array or a list, the array or list includes N indication values, and an i-th indication value is used to indicate a port set identifier that is ranked at the i-th position. For example, an array [2, 1, 4, 3] with a length of 4 indicates that the second port set is ranked first, the first port set is ranked second, the fourth port set is ranked third, and the third port set is ranked fourth.

In some embodiments, the above inter-set channel state information includes K2 pieces of inter-set channel state information description information, or is referred to as inter-set channel state information. That is, the inter-set channel state information includes K2 pieces of inter-set channel state information, and K2 is a positive integer.

In some embodiments, the K2 pieces of inter-set channel state information are used to describe coefficient information between all of port sets or part of the port sets among the N port sets. The coefficient information includes: one or more amplitude information, one or more phase information, indication information of one or more amplitudes, or phase indication information of one or more coefficients.

A piece of inter-set channel state information among the K2 pieces of inter-set channel state information corresponds to one of: a channel state information vector of a layer; a coefficient of a same channel state information vector of a same layer; or a coefficient of a same subband or a subband group.

Exemplarily, the K2 pieces of inter-set channel state information description information may be CSI_21, CSI_22, ..., CSI_2L. Herein, L is K2. Each piece of inter-set channel state information description information may be used to describe coefficients between all of port sets or part of the port sets among the N port sets. In the K2 pieces of inter-set channel state information description information, each piece of description information may include K inter-set channel state information elements, and the value of K is less than or equal to N. N, L, and K are all positive integers, and K is less than or equal to N.

In an example, a layer (or referred to as a transmission layer) corresponds to one or more pieces of inter-set channel state information description information. Alternatively, a polarization direction corresponds to one or more pieces of inter-set channel state information description information. Yet alternatively, a frequency-domain granularity group corresponds to one or more pieces of inter-set channel state information description information. The frequency-domain granularity group includes one or more physical resource blocks (PRBs), a subband, a part of a subband, etc. Furthermore, the K2 pieces of inter-set channel state information description information include at least one of: one or more amplitudes, one or more phases, indication information of one or more amplitudes, or phase indication information of one or more coefficients.

In some embodiments, the channel state information reference signal resource corresponding to the N port sets satisfies any one of: the N port sets corresponding to a group of reference signal resources; the N port sets corresponding to a plurality of groups of reference signal resources; N1 port sets among the N port sets corresponding to a group of reference signal resources, or the other N2 port sets among the N port sets corresponding to another group of reference signal resources, a sum of N1 and N2 is N; and the N port sets come from different communication nodes or panels.

In an example, the N port sets correspond to a same group of reference signal resources. For example, the N port sets all correspond to a group of CSI-RS resources. The reference signal resources may include a plurality of reference signal resource ports, and each reference signal resource port corresponds to a port in the N port sets. The reference signal resources may be CSI-RS resources, or other reference signal resources other than the CSI-RS resources.

In another example, the N port sets may correspond to N1 reference signal resources. For example, the N port sets may be grouped into N1 parts, a part of the port sets corresponds to reference signal resource 1, ..., and a part of the port sets corresponds to reference signal resource N1. N1 and N are both positive integers, and N1 is less than or equal to N.

In yet another example, the N port sets come from different communication nodes or panels. For example, the N port sets belong to N2 communication nodes, or the N port sets belong to N2 panels, and the N2 panels come from one or more communication nodes.

In some embodiments, a group of reference signal resources includes at least one reference signal resource. When only a reference signal resource is included, a group of reference signal resources may be replaced with a reference signal resource.

In some embodiments, the N port sets satisfy at least one of: a number of quantization bits of intra-set channel state information of at least one port set among the N port sets being greater than or equal to a number of quantization bits of intra-set channel state information of at least one other port set among the N port sets; a number of quantization bits of at least one piece of inter-set channel state information among the inter-set channel state information of the N port sets being greater than or equal to a number of quantization bits of at least one other inter-set channel state information among the inter-set channel state information of the N port sets; transmission power corresponding to at least one port set among the N port sets being greater than or equal to transmission power corresponding to at least one other port set among the N port sets; a number of layers corresponding to at least one port set among the N port sets being greater than or equal to a number of layers corresponding to at least one other port set among the N port sets; a modulation and coding scheme corresponding to at least one port set among the N port sets being different from a modulation and coding scheme corresponding to at least one other port set among the N port sets; modulation and coding schemes of the N port sets being all the same; a number of frequency-domain granularities corresponding to at least one port set among the N port sets being greater than or equal to a number of frequency-domain granularities corresponding to at least one other port set among the N port sets.

In an example, a number of quantization bits of intra-set channel state information of a port set among the N port sets is greater than or equal to a number of quantization bits of intra-set channel state information of another port set among the N port sets. Alternatively, a number of quantization bits of inter-set channel state information of a port set among the N port sets is greater than or equal to a number of quantization bits of inter-set channel state information of another port set among the N port sets.

In some examples, transmission power corresponding to a port set among the N port sets is greater than or equal to transmission power corresponding to another port set among the N port sets.

In some examples, a number of data layers corresponding to a port set among the N port sets is greater than or equal to a number of data layers corresponding to another port set among the N port sets.

In some examples, an index of a modulation and coding scheme corresponding to a port set among the N port sets is greater than or equal to an index of a modulation and coding scheme corresponding to another port set among the N port sets.

In some examples, a number of frequency-domain granularities corresponding to a port set among the N port sets is greater than or equal to a number of frequency-domain granularities corresponding to another port set among the N port sets.

In an example, taking an example of an antenna array including N0 ports, there may be different port set division methods. In addition, there may also be combinations of intra-set channel state information corresponding to different lengths. For example, N0=32 ports, in a linear array, N=8 components (or port sets) of 4*1, 4 components of 8*1, 2 components of 8*1 or 4 components of 4*1 are included. Alternatively, in a 2D array, for the 32 ports corresponding to a 4*8 array, 8 components of 4*1, 4 components of 4*2 or 2 components of 2*8 may be included. Yet alternatively, in a 3D array, for a 4*4*2 array with 32 antennas, 2 components of 4*4*1 or 4 components of 4*1*2 may be included. l*m*n indicates that a numbers of ports in dimension 1, dimension 2, and dimension 3 are l, m, and n, respectively. In addition, the above components may be port sets.

In some embodiments, there may be an intersection between different port sets. For example, 32 antennas may include 2 components (or port sets) of 8*1 and 4 components of 4*1, or may also include 1 component of 8*1 and 6 components of 4*1, etc.

In some embodiments, the same components (port sets) may constitute precodings of antenna forms in different forms. For example, in a linear array, 32 antennas may include 8 components of 4*1, 16 antennas may include 4 components of 4*1, and 8 antennas may include 2 components of 4*1. For another example, in a planar array, a 4*8 array with 32 antennas may include 8 components of 4*1, a 4*4 array with 16 antennas may include 4 components of 4*1, and a 4*2 array with 8 antennas may include 2 components of 4*1. For yet another example, in a 3D array, a 4×4×2 array with 32 antennas may include 8 components of 4*1*1, and a 4×2×2 array with 16 antennas may include 4 components of 4*1*1. In addition, the above components may be port sets.

In S103, a channel state information report is generated according to the K1 pieces of intra-set channel state information and the K2 pieces of inter-set channel state information, and the channel state information report is sent.

Exemplarily, the first communication node may generate a channel state information report according to the intra-set channel state information and the inter-set channel state information, and send the channel state information report to the second communication node.

In some embodiments, the channel state information report includes the K1 pieces of intra-set channel state information and/or the K2 pieces of inter-set channel state information.

In some embodiments, generating the channel state information report according to the K1 pieces of intra-set channel state information and the K2 pieces of inter-set channel state information, includes: grouping the K1 pieces of intra-set channel state information and the K2 pieces of inter-set channel state information into K3 channel state information groups, where one or more channel state information groups generate a channel state information report, and K1, K2, and K3 are positive integers.

In some embodiments, the K1 pieces of intra-set channel state information and the K2 pieces of inter-set channel state information are grouped into the K3 channel state information groups according to one of: a layer corresponding to the channel state information, a type of the channel state information, or a port set corresponding to the channel state information.

In some embodiments, dividing the K1 pieces of intra-set channel state information and the K2 pieces of inter-set channel state information into the K3 channel state information groups includes any one of: grouping at least one piece of intra-set channel state information and at least one piece of inter-set channel state information corresponding to a layer into a channel state information group; grouping at least one piece of intra-set channel state information into a channel state information group, for example, grouping all the K1 pieces of intra-set channel state information into one or more channel state information groups; grouping at least one piece of inter-set channel state information into a channel state information group, for example, grouping all the K2 pieces of intra-set channel state information into one or more channel state information groups; grouping at least one piece of intra-set channel state information belonging to a same channel state type into a channel state information group; or grouping the N port sets into K3 port parts, and grouping at least one piece of intra-set channel state information corresponding to each port part into a channel state information group.

A channel state group corresponds to a same coding block, and different channel state groups correspond to different coding blocks. In some embodiments, one or more channel state groups are transmitted through a CSI report.

In an example, the first communication node may acquire K1 pieces of intra-set channel state information, and each piece of intra-set channel state information corresponds to a port set. For example, first piece of intra-set channel state information corresponds to N₁₁ port sets, second piece of intra-set channel state information corresponds to N₁₂ port sets, i-th piece of intra-set channel state information corresponds to the N₁ᵢ-th port set, i=1, ..., K1. In addition, the first communication node acquires K2 pieces of inter-set channel state information, and groups the K1 pieces of intra-set channel state information and the K2 pieces of inter-set channel state information into K3 channel state information groups, and each channel state information group performs independent channel coding. The K3 channel state information groups may be transmitted through K3 channel state reports. The K3 channel state information reports may be transmitted on different slots. K3, K2, and K1 are all positive integers, and N₁ᵢ and i are also positive integers.

In another example, the first communication node may group the channel state information including one or more pieces of intra-set channel state information and one or more pieces of inter-set channel state information, into K3 channel state information groups, where K3 is a positive integer. For example, the K3 channel state information groups may be determined based on a number of layers of precoding, and the channel state information of one or more pieces of intra-set channel state information and one or more pieces of inter-set channel state information corresponding to each layer is a part. For another example, one or more pieces of intra-set channel state information is a part, and one or more pieces of inter-set channel state information is a part. Thus, the first communication node may send the K3 channel state information groups of the channel state information in at least 2 channel state information reports, for example, sending in K3 channel state information reports.

Based on the technical solutions provided in the present disclosure, under various antenna forms, antenna ports are grouped into a plurality of port sets, intra-set channel state information for the plurality of port sets and inter-set channel state information between all or part of the port sets are determined, and then a channel state information report is generated according to the intra-set channel state information and the inter-set channel state information. The second communication node obtains the channel state information report, and may determine final channel state information according to the intra-set channel state information and the inter-set channel state information, and the final channel state information matches the channel states under the plurality of port sets better, thereby improving the flexibility of generating channel state information and the accuracy of acquiring channel state information, and further improving the performance of the communication system.

In addition, the present disclosure also provides various combination methods of port sets, corresponding to a plurality of antenna forms, a plurality of determination methods of intra-set channel state information and inter-set channel state information, etc., making the determination of channel state information more flexible and improving the compatibility of the technical solutions.

In some embodiments, the present disclosure also provides a method for receiving channel state information, which is applied to a second communication node, for example, various types of base stations. As shown in FIG. 7, the method for receiving channel state information includes S201 and S202.

In S201, a channel state information report is received. The channel state information report includes K1 pieces of intra-set channel state information of N port sets and K2 pieces of inter-set channel state information of the N port sets, each port set includes at least one port, and N is an integer greater than 1. K1 and K2 are both positive integers, and K1 is less than or equal to N.

In some embodiments, the K2 pieces of inter-set channel state information of the N port sets may be K2 pieces of inter-set channel state information between all or part of port sets among the N port sets.

In some embodiments, the N port sets at least include a first port set and a second port set, and a number of ports of the first port set is greater than or equal to a number of ports of the second port set.

In some embodiments, the N port sets at least include a first port set and a second port set, including one of: ports of the first port set being partially the same as ports of the second port set; ports of the first port set being all different from ports of the second port set; or the first port set being a subset of the second port set.

In some embodiments, the antenna type corresponding to the N port sets includes at least one of: a single-polarized antenna, a dual-polarized antenna, a multi-polarized antenna, an omnidirectional antenna, a vertically polarized antenna, a horizontally polarized antenna, a circularly polarized antenna, an elliptically polarized antenna, or a slant-polarized antenna.

In some embodiments, the antenna array corresponding to the N port sets includes at least one of: a linear antenna array, a planar antenna array, a circular antenna array, a loop antenna array, a spatial antenna array, or various irregular antenna arrays.

In some embodiments, the N port sets may be acquired by the first communication node according to the higher layer signaling and/or physical layer signaling that is received.

In some embodiments, the N port sets may be determined according to channel information and/or an antenna form of a communication node.

In some embodiments, the channel state information report further includes port index information of K1 port sets among the N port sets.

In some embodiments, the port index information includes one of: absolute index information of the ports included in the K1 port sets; or relative index information of the ports included in the K1 port sets.

In some embodiments, the intra-set channel state information includes K1 pieces of intra-set channel state information, and at least one piece of intra-set channel state information among the K1 pieces of intra-set channel state information has a part of elements equal to zero.

In some embodiments, a generation method of at least one piece of intra-set channel state information among the K1 pieces of intra-set channel state information is different from a generation method of at least one other piece of intra-set channel state information among the K1 pieces of intra-set channel state information. In some examples, the generation methods of the K1 pieces of intra-set channel state information are all the same. In some examples, types of pieces of the channel state information of the K1 pieces of intra-set channel state information are all the same.

In some embodiments, the generation method of the intra-set channel state information includes at least one of: a generation method for generating channel state information based on at least one discrete Fourier transform (DFT) vector; a generation method for generating channel state information based on Householder transform; a generation method for generating channel state information based on channel information; a generation method for generating channel state information based on an eigenvector of channel information; or a generation method for generating channel state information based on a non-linear method.

In some embodiments, a length of a piece of intra-set channel state information among the K1 pieces of intra-set channel state information is greater than or equal to a length of at least one other piece of intra-set channel state information among the K1 pieces of intra-set channel state information.

In some embodiments, the type of the channel state information of at least one piece of intra-set channel state information among the K1 pieces of intra-set channel state information is different from the type of the channel state information of at least one other piece of intra-set channel state information among the K1 pieces of intra-set channel state information. The type of the channel state information includes but is not limited to types such as a codebook, an eigenvector, an eigenmatrix, a singular vector, a singular matrix, channel state information generated based on a non-linear method, a first-type codebook, a second-type codebook. For example, the type of the channel state information of at least one piece of intra-set channel state information is the first-type codebook, and the type of the channel state information of other pieces of intra-set channel state information includes the second-type codebook, etc.

In some embodiments, the channel state information report further includes M intra-set channel state information set indices. The M intra-set channel state information set indices are used to indicate M intra-set channel state information sets, and a piece of intra-set channel state information includes at least one piece of intra-set channel state information. M is a positive integer.

In some embodiments, the M intra-set channel state information sets satisfy at least one of: a number of channel state information of at least one intra-set channel state information set among the M intra-set channel state information sets being greater than or equal to a number of channel state information of at least one other intra-set channel state information set among the M intra-set channel state information sets; a channel state information generation method of at least one intra-set channel state information set among the M intra-set channel state information sets being different from a channel state information generation method of at least one other intra-set channel state information set among the M intra-set channel state information sets; the channel state information generation methods of the M intra-set channel state information sets being all the same; a length of channel state information of at least one intra-set channel state information set among the M intra-set channel state information sets being greater than or equal to a length of channel state information of at least one other intra-set channel state information set among the M intra-set channel state information sets; lengths of pieces of channel state information in a same intra-set channel state information set being the same, lengths of pieces of channel state information in different intra-set channel state information sets being different; the types of pieces of the channel state information in a same intra-set channel state information set being the same, or types of pieces of channel state information in different intra-set channel state information sets being different.

In some embodiments, the M intra-set channel state information set indices may also be determined from P intra-set channel state information sets according to the antenna form and/or the channel information, where P ≥ M, and P is a positive integer.

In some embodiments, each piece of intra-set channel state information among the K1 pieces of intra-set channel state information includes at least one of: one or more amplitude information, one or more phase information, indication information of one or more amplitudes, phase indication information of one or more coefficients, or an index of a channel state information set.

In some embodiments, the channel state information report further includes sorting information between the K1 pieces of intra-set channel state information of the N port sets. In some embodiments, the inter-set channel state information includes L pieces of inter-set channel state information, and L is a positive integer.

In some embodiments, the K2 pieces of inter-set channel state information are used to describe coefficient information between all of port sets or part of the port sets among the N port sets. The coefficient information includes: one or more amplitude information, one or more phase information, indication information of one or more amplitude, or phase indication information of one or more coefficient.

A piece of inter-set channel state information among the K2 pieces of inter-set channel state information corresponds to one of: a channel state information vector of a layer; a coefficient of a same channel state information vector of a same layer; or a coefficient of a same subband or a subband group.

In some embodiments, the channel state information reference signal resource corresponding to the N port sets satisfies any one of: the N port sets corresponding to a group of reference signal resources; the N port sets corresponding to a plurality of groups of reference signal resources; N1 port sets among the N port sets corresponding to a group of reference signal resources, or the other N2 port sets among the N port sets corresponding to another group of reference signal resources, a sum of N1 and N2 is N; and the N port sets come from different communication nodes or panels.

In some embodiments, the channel state information report includes intra-set channel state information of at least one port set among the N port sets and/or inter-set channel state information of at least one port set among the N port sets.

In some embodiments, generating the channel state information report according to the K1 pieces of intra-set channel state information and the K2 pieces of inter-set channel state information, includes: grouping the K1 pieces of intra-set channel state information and the K2 pieces of inter-set channel state information into K3 channel state information groups, where one or more channel state information groups generate a channel state information report, and K1, K2, and K3 are positive integers.

In some embodiments, the K1 pieces of intra-set channel state information and the K2 pieces of inter-set channel state information are grouped into the K3 channel state information groups according to one of: a layer corresponding to the channel state information, a type of the channel state information, or a port set corresponding to the channel state information.

In some embodiments, grouping the K1 pieces of intra-set channel state information and the K2 pieces of inter-set channel state information into the K3 channel state information groups includes any one of: grouping at least one piece of intra-set channel state information and at least one piece of inter-set channel state information corresponding to a same layer into a same channel state information group; grouping at least one piece of intra-set channel state information into a same channel state information group; grouping at least one piece of inter-set channel state information into a same channel state information group; grouping at least one piece of intra-set channel state information belonging to a same channel state type into a channel state information group; or grouping the N port sets into K3 port parts, and grouping at least one piece of intra-set channel state information corresponding to each port part into a channel state information group.

In some embodiments, the N port sets satisfy at least one of: a number of quantization bits of intra-set channel state information of at least one port set among the N port sets being greater than or equal to a number of quantization bits of intra-set channel state information of at least one other port set among the N port sets; a number of quantization bits of at least one piece of inter-set channel state information among the inter-set channel state information of the N port sets being greater than or equal to a number of quantization bits of at least one other inter-set channel state information among the inter-set channel state information of the N port sets; transmission power corresponding to at least one port set among the N port sets being greater than or equal to transmission power corresponding to at least one other port set among the N port sets; a number of layers corresponding to at least one port set among the N port sets being greater than or equal to a number of layers corresponding to at least one other port set among the N port sets; a modulation and coding scheme corresponding to at least one port set among the N port sets being different from a modulation and coding scheme corresponding to at least one other port set among the N port sets; modulation and coding schemes of the N port sets being all the same; a number of frequency-domain granularities corresponding to at least one port set among the N port sets being greater than or equal to a number of frequency-domain granularities corresponding to at least one other port set among the N port sets.

In addition, for a detailed description of S201, reference may also be made to the related description of the above S101 to S103, which will not be repeated herein.

In S202, channel state information is generated according to the K1 pieces of intra-set channel state information and the K2 pieces of inter-set channel state information.

Furthermore, data or a signal may be sent based on the channel state information that is generated.

Based on the technical solutions provided in the present disclosure, in the case of a plurality of port sets, the received channel state information report is generated based on the intra-set channel state information and the inter-set channel state information. The second communication node receives the channel state information report, and may determine the final channel state information according to the intra-set channel state information and the inter-set channel state information. The final channel information matches the channel states under the plurality of port sets better, that is, the channel state information obtained based on the channel state information report is more accurate, which may further make the subsequent transmission and processing based on the channel state information more reliable, thereby improving the performance of the communication system.

The above introduces the solutions provided by the present disclosure mainly from the perspective of interaction between various communication nodes. It can be understood that, in order to implement the above functions, various communication nodes contain corresponding hardware structures and/or software modules for performing various functions. Those skilled in the art should easily realize that the present disclosure can be implemented in the form of hardware or a combination of hardware and computer software, in combination with the algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

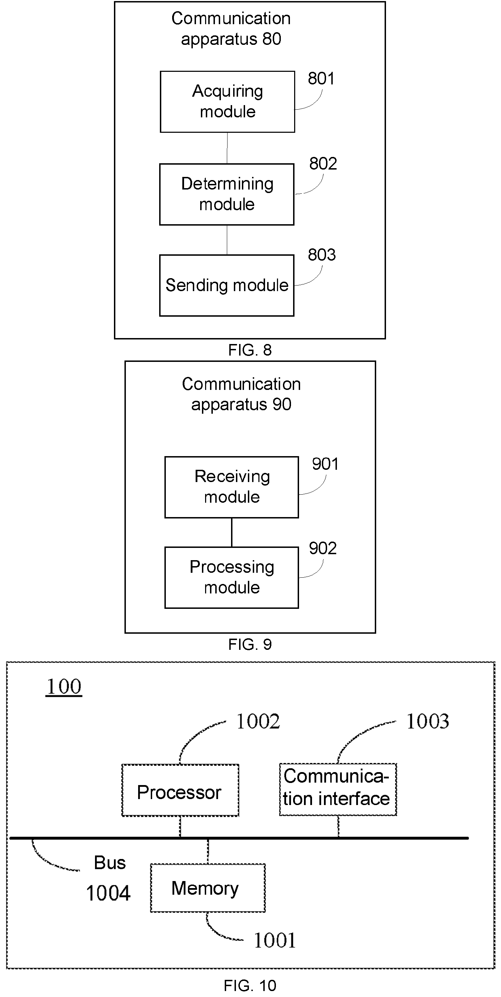

FIG. 8 shows a schematic diagram of components of a communication apparatus according to the embodiments of the present disclosure. As shown in FIG. 8, the communication apparatus 80 includes an acquiring module 801, a determining module 802, and a sending module 803.

The acquiring module 801, is configured to acquire N port sets; where each port set includes at least one port, and N is an integer greater than 1.

The determining module 802, is configured to determine K1 pieces of intra-set channel state information of the N port sets and K2 pieces of inter-set channel state information between all or part of port sets among the N port sets.

The sending module 803, is configured to generate a channel state information report according to the K1 pieces of intra-set channel state information and the K2 pieces of inter-set channel state information, and send the channel state information report. K1 and K2 are both positive integers, and K1 is less than or equal to N.

In some embodiments, the intra-set channel state information includes K1 pieces of intra-set channel state information, and the inter-set channel state information includes at least K2 pieces of inter-set channel state information. K1 and K2 are both positive integers, and K1 is less than or equal to N.

In some embodiments, the N port sets at least include a first port set and a second port set. A number of ports of the first port set is greater than or equal to a number of ports of the second port set.

In some embodiments, the N port sets at least include a first port set and a second port set, including one of: ports of the first port set being partially the same as ports of the second port set; ports of the first port set being all different from ports of the second port set; or the first port set being a subset of the second port set.

In some embodiments, an antenna type corresponding to the N port sets includes at least one of: a single-polarized antenna, a dual-polarized antenna, a multi-polarized antenna, an omnidirectional antenna, a vertically polarized antenna, a horizontally polarized antenna, a circularly polarized antenna, an elliptically polarized antenna, or a slant-polarized antenna.

In some embodiments, an antenna array corresponding to the N port sets includes at least one of: a linear antenna array, a planar antenna array, a circular antenna array, a loop antenna array, a spatial antenna array, or various irregular antenna arrays.

In some embodiments, the acquiring module 801, is configured, for example, to: acquire the N port sets according to a higher layer signaling and/or a physical layer signaling that is received.

In some embodiments, the acquiring module 801, is configured, for example, to: acquire the N port sets according to an antenna form of a communication node and/or channel information.

In some embodiments, the channel state information report further includes port index information of K1 port sets among the N port sets.

In some embodiments, the port index information includes one of: absolute index information of the ports included in the K1 port sets; or relative index information of the ports included in the K1 port sets.

In some embodiments, the intra-set channel state information includes K1 pieces of intra-set channel state information, and at least one piece of intra-set channel state information among the K1 pieces of intra-set channel state information has a part of elements equal to zero.

In some embodiments, a generation method of at least one piece of intra-set channel state information among the K1 pieces of intra-set channel state information is different from a generation method of at least one other piece of intra-set channel state information among the K1 pieces of intra-set channel state information. In some examples, the generation methods of the K1 pieces of intra-set channel state information are all the same.

In some embodiments, the generation method of the intra-set channel state information includes at least one of: a generation method of generating channel state information based on at least one discrete Fourier transform (DFT) vector; a generation method of generating channel state information based on Householder transform; a generation method of generating channel state information based on channel information; a generation method of generating channel state information based on an eigenvector of channel information; or a generation method of generating channel state information based on a non-linear method .

In some embodiments, a length of at least one piece of intra-set channel state information among the K1 pieces of intra-set channel state information is greater than or equal to a length of at least one other piece of intra-set channel state information among the K1 pieces of intra-set channel state information.

In some embodiments, a type of the channel state information of at least one piece of intra-set channel state information among the K1 pieces of intra-set channel state information is different from a type of the channel state information of at least one other piece of intra-set channel state information among the K1 pieces of intra-set channel state information. In some examples, the types of pieces of the channel state information of the K1 pieces of intra-set channel state information are all the same. The type of the channel state information includes but is not limited to types such as a codebook, an eigenvector, an eigenmatrix, a singular vector, a singular matrix, channel state information generated based on a non-linear method, a first-type codebook, a second-type codebook.

In some embodiments, the channel state information report further includes M intra-set channel state information set indices. The M intra-set channel state information set indices are used to indicate M intra-set channel state information sets, and M is a positive integer.

In some embodiments, the M intra-set channel state information sets satisfy at least one of: a number of channel state information of at least one intra-set channel state information set among the M intra-set channel state information sets being greater than or equal to a number of channel state information of at least one other intra-set channel state information set among the M intra-set channel state information sets; a channel state information generation method of at least one intra-set channel state information set among the M intra-set channel state information sets being different from a channel state information generation method of at least one other intra-set channel state information set among the M intra-set channel state information sets; the channel state information generation methods of the M intra-set channel state information sets being all the same; a length of channel state information of at least one intra-set channel state information set among the M intra-set channel state information sets being greater than or equal to a length of channel state information of at least one other intra-set channel state information set among the M intra-set channel state information sets; lengths of pieces of channel state information in a same intra-set channel state information set being the same, lengths of pieces of channel state information in different intra-set channel state information sets being different; the types of pieces of the channel state information in a same intra-set channel state information set being the same, or types of pieces of the channel state information in different intra-set channel state information sets being different.

In some embodiments, the determining module 802, is further configured to: determine the M intra-set channel state information set indices from P intra-set channel state information sets according to an antenna form and/or channel information; P ≥ M, and P is a positive integer.

In some embodiments, each piece of intra-set channel state information among the K1 pieces of intra-set channel state information includes at least one of: one or more amplitude information, one or more phase information, indication information of one or more amplitudes, phase indication information of one or more coefficients, or an index of a channel state information set.

In some embodiments, the channel state information report further includes sorting information between the K1 pieces of intra-set channel state information of the N port sets.

In some embodiments, the channel state information report further includes L pieces of inter-set channel state information, and L is a positive integer.

In some embodiments, the K2 pieces of inter-set channel state information are used to describe coefficient information between all of port sets or part of the port sets of the N port sets. The coefficient information includes: one or more amplitude information, one or more phase information, indication information of one or more amplitudes, or phase indication information of one or more coefficients.

A piece of inter-set channel state information among the K2 pieces of inter-set channel state information corresponds to one of: a channel state information vector of a layer; a coefficient of a same channel state information vector of a same layer; or a coefficient of a same subband or a subband group.

In some embodiments, the channel state information reference signal resource corresponding to the N port sets satisfies any one of: the N port sets corresponding to a group of reference signal resources; the N port sets corresponding to a plurality of groups of reference signal resources; or N1 port sets among the N port sets corresponding to a group of reference signal resources, and the other N2 port sets among the N port sets corresponding to another group of reference signal resources, where a sum of N1 and N2 is N, and N1 and N2 are positive integers; and the N port sets come from at least one communication node or panel.

In some embodiments, the channel state information report includes intra-set channel state information of at least one port set among the N port sets and/or inter-set channel state information of at least one port set among the N port sets.

In some embodiments, generating the channel state information report according to the K1 pieces of intra-set channel state information and the K2 pieces of inter-set channel state information, includes: grouping the K1 pieces of intra-set channel state information and the K2 pieces of inter-set channel state information into K3 channel state information groups, where one or more channel state information groups generate one channel state information report, and K1, K2, and K3 are positive integers.

In some embodiments, the K1 pieces of intra-set channel state information and the K2 pieces of inter-set channel state information are grouped into K3 channel state information groups according to one of: a layer corresponding to channel state information, a type of channel state information, or a port set corresponding to channel state information.

In some embodiments, grouping the K1 pieces of intra-set channel state information and the K2 pieces of inter-set channel state information into the K3 channel state information groups, includes any one of: grouping at least one piece of intra-set channel state information and at least one piece of inter-set channel state information corresponding to a same layer into a same channel state information group; grouping at least one piece of intra-set channel state information into a same channel state information group; grouping at least one piece of inter-set channel state information into a same channel state information group; grouping at least one piece of intra-set channel state information belonging to a same channel state type into one channel state information group; or grouping the N port sets into K3 port parts, and grouping at least one piece of intra-set channel state information corresponding to each port part into a channel state information group.

In some embodiments, the N port sets satisfy at least one of: a number of quantization bits of intra-set channel state information of at least one port set among the N port sets being greater than or equal to a number of quantization bits of intra-set channel state information of at least one other port set among the N port sets; a number of quantization bits of at least one piece of inter-set channel state information among the inter-set channel state information of the N port sets being greater than or equal to a number of quantization bits of at least one other inter-set channel state information among the inter-set channel state information of the N port sets; transmission power corresponding to at least one port set among the N port sets being greater than or equal to transmission power corresponding to at least one other port set among the N port sets; a number of layers corresponding to at least one port set among the N port sets being greater than or equal to a number of layers corresponding to at least one other port set among the N port sets; a modulation and coding scheme corresponding to at least one port set among the N port sets being different from a modulation and coding scheme corresponding to at least one other port set among the N port sets; modulation and coding schemes of the N port sets being all the same; a number of frequency-domain granularities corresponding to at least one port set among the N port sets being greater than or equal to a number of frequency-domain granularities corresponding to at least one other port set among the N port sets.

For more detailed descriptions of the above acquiring module 801, the determining module 802, and the sending module 803, and more detailed descriptions of various technical features therein, and descriptions of the beneficial effects, etc., references may be made to the above corresponding method embodiment sections, which will not be repeated herein.

FIG. 9 shows a schematic diagram of components of a communication apparatus according to the embodiments of the present disclosure. As shown in FIG. 9, the communication apparatus 90 includes a receiving module 901 and a processing module 902.

The receiving module 901, is configured to receive a channel state information report. The channel state information report includes K1 pieces of intra-set channel state information of N port sets and K2 pieces of inter-set channel state information of all or part of the port sets among the N port sets. Each port set includes at least one port, and N is an integer greater than 1.

The processing module 902, is configured to generate channel state information according to the K1 pieces of intra-set channel state information and the K2 pieces of inter-set channel state information.

In some embodiments, the N port sets at least include a first port set and a second port set. A number of ports of the first port set is greater than or equal to a number of ports of the second port set.

In some embodiments, the N port sets at least include a first port set and a second port set, including one of: ports of the first port set being partially the same as ports of the second port set; ports of the first port set being all different from ports of the second port set; or the first port set being a subset of the second port set.

In some embodiments, an antenna type corresponding to the N port sets includes at least one of: a single-polarized antenna, a dual-polarized antenna, a multi-polarized antenna, an omnidirectional antenna, a vertically polarized antenna, a horizontally polarized antenna, a circularly polarized antenna, an elliptically polarized antenna, or a slant-polarized antenna.

In some embodiments, the antenna array corresponding to the N port sets includes at least one of: a linear antenna array, a planar antenna array, a circular antenna array, a loop antenna array, a spatial antenna array, or various irregular antenna arrays.

In some embodiments, the N port sets may be acquired by the first communication node according to a higher layer signaling and/or a physical layer signaling that is received.

In some embodiments, the N port sets may be determined according to an antenna form of a communication node and/or channel information.

In some embodiments, the channel state information report further includes port index information of K1 port sets among the N port sets.

In some embodiments, the port index information includes one of: absolute index information of the ports included in the K1 port sets; or relative index information of the ports included in the K1 port sets.

In some embodiments, the intra-set channel state information includes K1 pieces of intra-set channel state information, and at least one piece of intra-set channel state information among the K1 pieces of intra-set channel state information has a part of elements equal to zero.

In some embodiments, a generation method of at least one piece of intra-set channel state information among the K1 pieces of intra-set channel state information is different from a generation method of at least one other piece of intra-set channel state information among the K1 pieces of intra-set channel state information. In some embodiments, the generation methods of the K1 pieces of intra-set channel state information are all the same.

In some embodiments, the generation method of the intra-set channel state information includes at least one of: a generation method of generating channel state information based on at least one discrete Fourier transform (DFT) vector; a generation method of generating channel state information based on Householder transform; a generation method of generating channel state information based on channel information; a generation method of generating channel state information based on an eigenvector of channel information; or a generation method of generating channel state information based on a non-linear method.

In some embodiments, a length of at least one piece of intra-set channel state information among the K1 pieces of intra-set channel state information is greater than or equal to a length of at least one other piece of intra-set channel state information among the K1 pieces of intra-set channel state information.

In some embodiments, a type of the channel state information of at least one piece of intra-set channel state information among the K1 pieces of intra-set channel state information is different from a type of the channel state information of at least one other piece of intra-set channel state information among the K1 pieces of intra-set channel state information. In some examples, the types of pieces of the channel state information of the K1 pieces of intra-set channel state information are all the same. The type of the channel state information includes but is not limited to types such as a codebook, an eigenvector, an eigenmatrix, a singular vector, a singular matrix, channel state information generated based on a non-linear method, a first-type codebook, a second-type codebook.

In some embodiments, the channel state information report further includes M intra-set channel state information set indices. The M intra-set channel state information set indices are used to indicate M intra-set channel state information sets, and a piece of intra-set channel state information includes at least one piece of intra-set channel state information, and M is a positive integer.

In some embodiments, the M intra-set channel state information sets satisfy at least one of: a number of channel state information of at least one intra-set channel state information set among the M intra-set channel state information sets being greater than or equal to a number of channel state information of at least one other intra-set channel state information set among the M intra-set channel state information sets; a channel state information generation method of at least one intra-set channel state information set among the M intra-set channel state information sets being different from a channel state information generation method of at least one other intra-set channel state information set among the M intra-set channel state information sets; the channel state information generation methods of the M intra-set channel state information sets being all the same; a length of channel state information of at least one intra-set channel state information set among the M intra-set channel state information sets being greater than or equal to a length of channel state information of at least one other intra-set channel state information set among the M intra-set channel state information sets; lengths of pieces of channel state information in a same intra-set channel state information set being the same, lengths of pieces of channel state information in different intra-set channel state information sets being different; the types of pieces of the channel state information in a same intra-set channel state information set being the same, or types of pieces of the channel state information in different intra-set channel state information sets being different.

In some embodiments, the M intra-set channel state information set indices may also be determined from P intra-set channel state information sets according to the antenna form and/or the channel information, P ≥ M, and P is a positive integer.

In some embodiments, each piece of intra-set channel state information among the K1 pieces of intra-set channel state information includes at least one of: one or more amplitude information, one or more phase information, indication information of one or more amplitudes, phase indication information of one or more coefficients, or an index of a channel state information set.

In some embodiments, the channel state information report further includes sorting information between the intra-set channel state information of the N port sets. In some embodiments, the inter-set channel state information includes L pieces of inter-set channel state information, and L is a positive integer.

In some embodiments, the K2 pieces of inter-set channel state information include coefficient information used to describe between all of the port sets or part of the port sets among the N port sets. The coefficient information includes: one or more amplitude information, one or more phase information, indication information of one or more amplitudes, or phase indication information of one or more coefficients.

A piece of inter-set channel state information among the K2 pieces of inter-set channel state information corresponds to one of: a channel state information vector of a layer; a coefficient of a same channel state information vector of a same layer; or a coefficient of a same subband or a subband group.

In some embodiments, the channel state information reference signal resource corresponding to the N port sets satisfies any one of: the N port sets corresponding to a group of reference signal resources; the N port sets corresponding to a plurality of groups of reference signal resources; or N1 port sets among the N port sets corresponding to a group of reference signal resources, and the other N2 port sets among the N port sets corresponding to another group of reference signal resources, where a sum of N1 and N2 is N; and the N port sets come from at least one communication node or panel.

In some embodiments, the channel state information report includes intra-set channel state information of at least one port set among the N port sets and/or inter-set channel state information of at least one port set among the N port sets.

In some embodiments, generating the channel state information report according to the K1 pieces of intra-set channel state information and the K2 pieces of inter-set channel state information, includes: grouping the K1 pieces of intra-set channel state information and the K2 pieces of inter-set channel state information into K3 channel state information groups, where one or more channel state information groups generate one channel state information report, and K1, K2, and K3 are positive integers.

In some embodiments, the K1 pieces of intra-set channel state information and the K2 pieces of inter-set channel state information are grouped into K3 channel state information groups according to one of: a layer corresponding to channel state information, a type of channel state information, or a port set corresponding to channel state information.

In some embodiments, grouping the K1 pieces of intra-set channel state information and the K2 pieces of inter-set channel state information into the K3 channel state information groups, includes any one of: grouping at least one piece of intra-set channel state information and at least one piece of inter-set channel state information corresponding to a same layer into a same channel state information group; grouping at least one piece of intra-set channel state information into a same channel state information group; grouping at least one piece of inter-set channel state information into a same channel state information group; grouping at least one piece of intra-set channel state information belonging to a same channel state type into one channel state information group; or grouping the N port sets into K3 port parts, and grouping at least one piece of intra-set channel state information corresponding to each port part into a channel state information group.

In some embodiments, the N port sets satisfy at least one of: a number of quantization bits of intra-set channel state information of at least one port set among the N port sets being greater than or equal to a number of quantization bits of intra-set channel state information of at least one other port set among the N port sets; a number of quantization bits of at least one piece of inter-set channel state information among the inter-set channel state information of the N port sets being greater than or equal to a number of quantization bits of at least one other inter-set channel state information among the inter-set channel state information of the N port sets; transmission power corresponding to at least one port set among the N port sets being greater than or equal to transmission power corresponding to at least one other port set among the N port sets; a number of layers corresponding to at least one port set among the N port sets being greater than or equal to a number of layers corresponding to at least one other port set among the N port sets; a modulation and coding scheme corresponding to at least one port set among the N port sets being different from a modulation and coding scheme corresponding to at least one other port set among the N port sets; modulation and coding schemes of the N port sets being all the same; a number of frequency-domain granularities corresponding to at least one port set among the N port sets being greater than or equal to a number of frequency-domain granularities corresponding to at least one other port set among the N port sets.

For more detailed descriptions of the above receiving module 901, and more detailed descriptions of various technical features therein, and descriptions of the beneficial effects, etc., references may be made to the above corresponding method embodiment sections, which will not be repeated herein.

It should be noted that, the modules in FIG. 8 or FIG. 9 may also be referred to as units and for example, the sending module may be referred to as a sending unit. In addition, in the embodiments shown in FIG. 8 or FIG. 9, the names of the various modules may not be the names shown in the figures, and for example, the sending module may also be referred to as a communication module, and the receiving module may also be referred to as a communication module.

If the respective units or modules in FIG. 8 or FIG. 9 are implemented in the form of a software functional module, and sold or used as an independent product, the respective units may be stored in a computer readable storage medium. Based on this understanding, the technical solutions of the embodiments of the present disclosure may be essentially, or a part of the technical solutions that contributes to the relevant technology, or a part of all of the technical solutions, may be embodied in the form of a software product. The computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of medium capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of a communication apparatus, the communication apparatus may be the above communication apparatus 80 or communication apparatus 90. As shown in FIG. 10, the communication apparatus 100 includes a processor 1002, a communication interface 1003, and a bus 1004. In some embodiments, the communication apparatus 100 may also include a memory 1001.

The processor 1002 may implement or execute various illustrative logical blocks, modules and circuits described in conjunction with the contents of the present disclosure. The processor 1002 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents of the present disclosure. The processor 1002 may also be a combination that implements computing functions, for example, including a combination of one or more microprocessors, a combination of a digital signal processor (DSP) and a microprocessor, or the like.

The communication interface 1003 is configured to connect with other devices via a communication network. The communication network may be an Ethernet, a radio access network, a wireless local area network (WLAN), or the like.

The memory 1001 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 1001 may exist independently of the processor 1002. The memory 1001 may be connected to the processor 1002 via the bus 1004 and is used for storing instructions or program codes. The processor 1002, when calling and executing the instructions or program codes stored in the memory 1001, is capable of implementing the method provided in the embodiments of the present disclosure.

As another implementation, the memory 1001 may be integrated with the processor 1002.

The bus 1004 may be an extended industry standard architecture (EISA) bus or the like. Buses 1004 may be grouped into address buses, data buses, control buses, and the like. For ease of representation, only one bold line is used for the representation in FIG. 10, but it does not mean that there is only one bus or one type of the bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is grouped into different functional modules to complete all or a part of the functions mentioned above.

The embodiments of the present disclosure further provide a computer readable storage medium (e.g., a non-transitory computer readable storage medium). All or a part of the procedures in the above method embodiments may be completed by related hardware indicated by computer instructions, and the program may be stored in the above computer readable storage medium. The program, upon being executed, may include the procedures of the above method embodiments. The computer readable storage medium may be or a memory of any one of the above embodiments. The above computer readable storage medium may also be an external storage device of the device or apparatus mentioned above, e.g., a plug-in hard disk, a smart memory card (smart media card, SMC), a secure digital (SD) card, a flash card, etc., equipped on the above device or apparatus. Furthermore, the above computer readable storage medium may further include both an internal storage unit and an external storage device of the above device or apparatus. The above computer readable storage medium is used to store the above computer program, and other programs and data required for the above device or apparatus. The above computer readable storage medium may also be used to temporarily store data that has been output or is to be output.

The embodiments of the present disclosure further provide a computer program product, and the computer product contains a computer program. The computer program product, upon being executed on a computer, enables the computer to perform any one of the methods provided in the above embodiments.

Based on the technical solutions provided in the present disclosure, in the case of a plurality of port sets, intra-set channel state information of the plurality of port sets and inter-set channel state information between all or part of the port sets of the plurality of port sets may be determined, and then a channel state information report is generated according to the intra-set channel state information and the inter-set channel state information, so that the channel state information report matches the channel states under the plurality of port sets better, thereby improving the flexibility of generating channel state information and/or the accuracy of acquiring channel state information, and further improving the performance of the communication system.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents within the scope of the present disclosure. Obviously, those skilled in the art may make various modifications and variants to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A method for sending channel state information, **characterized by** comprising:
acquiring N port sets; wherein each port set among the N port sets comprises at least one port, and N is an integer greater than 1;
determining K1 pieces of intra-set channel state information of the N port sets, and K2 pieces of inter-set channel state information of the N port sets; and
generating a channel state information report according to the K1 pieces of intra-set channel state information and the K2 pieces of inter-set channel state information, and sending the channel state information report; wherein K1 and K2 are both positive integers, and K1 is less than or equal to N.

2. The method according to claim 1, wherein the N port sets comprise at least a first port set and a second port set, and a number of ports of the first port set is greater than or equal to a number of ports of the second port set.

3. The method according to claim 1, wherein the N port sets comprise at least a first port set and a second port set, and the first port set and the second port set satisfy one of:
ports of the first port set being partially the same as ports of the second port set;
ports of the first port set being all different from ports of the second port set; or
the first port set being a subset of the second port set.

4. The method according to claim 1, wherein an antenna type corresponding to the N port sets comprises at least one of:
a single-polarized antenna, a dual-polarized antenna, a multi-polarized antenna, an omnidirectional antenna, a vertically polarized antenna, a horizontally polarized antenna, a circularly polarized antenna, an elliptically polarized antenna, or a slant-polarized antenna.

5. The method according to claim 1, wherein an antenna array corresponding to the N port sets comprises at least one of:
a linear antenna array, a planar antenna array, a circular antenna array, a loop antenna array, a spatial antenna array, or various irregular antenna arrays.

6. The method according to claim 1, wherein acquiring the N port sets, comprises:
acquiring the N port sets according to a higher layer signaling and/or a physical layer signaling that is received.

7. The method according to claim 1, wherein acquiring the N port sets, comprises:
acquiring the N port sets according to an antenna form of a communication node and/or channel information.

8. The method according to claim 1, wherein the channel state information report further comprises port index information of K1 port sets among the N port sets.

9. The method according to claim 8, wherein the port index information comprises one of:
absolute index information of ports comprised in the K1 port sets; or
relative index information of ports comprised in the K1 port sets.

10. The method according to claim 1, wherein at least one piece of intra-set channel state information among the K1 pieces of intra-set channel state information has a part of elements equal to zero.

11. The method according to claim 1, wherein a generation method of at least one piece of intra-set channel state information among the K1 pieces of intra-set channel state information is different from a generation method of at least one other piece of intra-set channel state information among the K1 pieces of intra-set channel state information.

12. The method according to claim 11, wherein the generation method of the at least one piece of intra-set channel state information comprises at least one of:
a generation method of generating channel state information based on at least one discrete Fourier transform vector;
a generation method of generating channel state information based on Householder transform;
a generation method of generating channel state information based on channel information;
a generation method of generating channel state information based on an eigenvector of channel information; or
a generation method of generating channel state information based on a non-linear method.

13. The method according to claim 1, wherein a length of at least one piece of intra-set channel state information among the K1 pieces of intra-set channel state information is greater than or equal to a length of at least one other piece of intra-set channel state information among the K1 pieces of intra-set channel state information.

14. The method according to claim 1, wherein a type of channel state information of at least one piece of intra-set channel state information among the K1 pieces of intra-set channel state information is different from a type of channel state information of at least one other piece of intra-set channel state information among the K1 pieces of intra-set channel state information.

15. The method according to claim 1, wherein the channel state information report further comprises M intra-set channel state information set indices; wherein the M intra-set channel state information set indices are used to indicate M intra-set channel state information sets, and M is a positive integer.

16. The method according to claim 15, wherein the M intra-set channel state information sets satisfy at least one of:
a number of channel state information of at least one intra-set channel state information set among the M intra-set channel state information sets being greater than or equal to a number of channel state information of at least one other intra-set channel state information set among the M intra-set channel state information sets;
a generation method of channel state information of at least one intra-set channel state information set among the M intra-set channel state information sets being different from a generation method of channel state information of at least one other intra-set channel state information set among the M intra-set channel state information sets;
a length of channel state information of at least one intra-set channel state information set among the M intra-set channel state information sets being greater than or equal to a length of channel state information of at least one other intra-set channel state information set among the M intra-set channel state information sets;
lengths of pieces of channel state information in a same intra-set channel state information set being the same, and lengths of pieces of channel state information in different intra-set channel state information sets being different; or
types of pieces of channel state information in a same intra-set channel state information set being the same, and types of pieces of channel state information in different intra-set channel state information sets being different.

17. The method according to claim 15, further comprising:
determining the M intra-set channel state information sets from P intra-set channel state information sets according to an antenna form and/or channel information; P ≥ M, and P is a positive integer.

18. The method according to claim 1, wherein each piece of intra-set channel state information among the K1 pieces of intra-set channel state information comprises at least one of:
one or more amplitude information, one or more phase information, indication information of one or more amplitudes, phase indication information of one or more coefficients, or an index of a channel state information set.

19. The method according to claim 18, wherein the channel state information report further comprises sorting information between the K1 pieces of intra-set channel state information of the N port sets.

20. The method according to claim 1, wherein the K2 pieces of inter-set channel state information are used to describe coefficient information between all of port sets or part of port sets among the N port sets, wherein the coefficient information comprises: one or more amplitude information, one or more phase information, indication information of one or more amplitudes, or phase indication information of one or more coefficients.

21. The method according to claim 20, wherein a piece of inter-set channel state information among the K2 pieces of inter-set channel state information corresponds to one of:
a channel state information vector of a layer;
a coefficient of a same channel state information vector of a same layer; or
a coefficient of a same subband or subband group.

22. The method according to claim 1, wherein a channel state information reference signal resource corresponding to the N port sets satisfies any one of:
the N port sets corresponding to a group of reference signal resources;
the N port sets corresponding to a plurality of groups of reference signal resources; or
N1 port sets among the N port sets corresponding to a group of reference signal resources, and the other N2 port sets among the N port sets corresponding to another group of reference signal resources; wherein a sum of N1 and N2 is N, and N1 and N2 are positive integers.

23. The method according to claim 1, wherein generating the channel state information report according to the K1 pieces of intra-set channel state information and the K2 pieces of inter-set channel state information, comprises:
grouping the K1 pieces of intra-set channel state information and the K2 pieces of inter-set channel state information into K3 channel state information groups, wherein one or more channel state information groups generate a channel state information report, and K3 is a positive integer.

24. The method according to claim 23, wherein the K1 pieces of intra-set channel state information and the K2 pieces of inter-set channel state information are grouped into the K3 channel state information groups according to one of: a layer corresponding to channel state information, a type of channel state information, or a port set corresponding to channel state information.

25. The method according to claim 24, wherein grouping the K1 pieces of intra-set channel state information and the K2 pieces of inter-set channel state information into the K3 channel state information groups, comprises any one of:
grouping at least one piece of intra-set channel state information and at least one piece of inter-set channel state information corresponding to a same layer into a same channel state information group;
grouping at least one piece of intra-set channel state information into a same channel state information group;
grouping at least one piece of inter-set channel state information into a same channel state information group;
grouping at least one piece of intra-set channel state information belonging to a same channel state type into a channel state information group; or
grouping the N port sets into K3 port parts, and grouping at least one piece of intra-set channel state information corresponding to each port part among the K3 port parts into a channel state information group.

26. The method according to claim 1, wherein the N port sets satisfy at least one of:
a number of quantization bits of intra-set channel state information of at least one port set among the N port sets being greater than or equal to a number of quantization bits of intra-set channel state information of at least one other port set among the N port sets;
a number of quantization bits of at least one pieces of inter-set channel state information among inter-set channel state information of the N port sets being greater than or equal to a number of quantization bits of at least one other piece of inter-set channel state information among inter-set channel state information of the N port sets;
transmission power corresponding to at least one port set among the N port sets being greater than or equal to transmission power corresponding to at least one other port set among the N port sets;
a number of layers corresponding to at least one port set among the N port sets being greater than or equal to a number of layers corresponding to at least one other port set among the N port sets;
a modulation and coding scheme corresponding to at least one port set among the N port sets being different from a modulation and coding scheme corresponding to at least one other port set among the N port sets; or
a number of frequency-domain granularities corresponding to at least one port set among the N port sets being greater than or equal to a number of frequency-domain granularities corresponding to at least one other port set among the N port sets.

27. A method for receiving channel state information, **characterized by** comprising:
receiving a channel state information report; wherein the channel state information report comprises K1 pieces of intra-set channel state information of N port sets and K2 pieces of inter-set channel state information of the N port sets, each port set among the N port sets comprises at least one port, and N is an integer greater than 1; and
generating channel state information according to the K1 pieces of intra-set channel state information and the K2 pieces of inter-set channel state information, wherein K1 and K2 are both positive integers, and K1 is less than or equal to N.

28. The method according to claim 27, wherein the N port sets comprise at least a first port set and a second port set, and a number of ports of the first port set is greater than or equal to a number of ports of the second port set.

29. The method according to claim 27, wherein the N port sets comprise at least a first port set and a second port set, and the first port set and the second port set satisfy one of:
ports of the first port set being partially the same as ports of the second port set;
ports of the first port set being all different from ports of the second port set; or
the first port set being a subset of the second port set.

30. The method according to claim 27, wherein each piece of intra-set channel state information among the K1 pieces of intra-set channel state information comprises at least one of:
one or more amplitude information, one or more phase information, indication information of one or more amplitudes, phase indication information of one or more coefficients, or an index of a channel state information set.

31. The method according to claim 27, wherein the K2 pieces of inter-set channel state information are used to describe coefficient information between all of port sets or part of the port sets of the N port sets, wherein the coefficient information comprises: one or more amplitude information, one or more phase information, indication information of one or more amplitudes, or phase indication information of one or more coefficients.

32. The method according to claim 27, wherein a generation method of at least one piece of intra-set channel state information among the K1 pieces of intra-set channel state information is different from a generation method of at least one other piece of intra-set channel state information among the K1 pieces of intra-set channel state information.

33. A communication apparatus, **characterized by** comprising: a memory and a processor; the memory is coupled with the processor; the memory is configured to store instructions executable by the processor; and the processor, upon executing the instructions, performs the method according to any one of claims 1 to 32.

34. A computer readable storage medium, **characterized in that** the computer readable storage medium has stored computer instructions thereon, and the computer instructions, upon being executed on a communication apparatus, enable the communication apparatus to perform the method according to any one of claims 1 to 32.
